# EUROPEAN PATENT APPLICATION

(11) **EP 3 242 444 A1**
(43) Date of publication of application: **08.11.2017**
(21) Application number: 15877498.4
(22) Date of filing: 06.03.2015
(51) Int. Cl.: H04L 12/28, H04L 9/32

(54) **SERVICE PROCESSING METHOD AND DEVICE**

(30) Priority: 14.01.2015 WO PCT/CN2015/070664
(71) Applicant: Huawei Technologies Co. Ltd., Shenzhen, Guangdong 518129 (CN)
(72) Inventor: WEI, Anni, Shenzhen Guangdong 518129 (CN); XIONG, Chunshan, Shenzhen Guangdong 518129 (CN)
(74) Representative: Goddar, Heinz J.
(86) International application number: PCT/CN2015/073784
(87) International publication number: WO 2016/112580

(57) **Abstract**

The present invention relates to the communications field, and discloses a service processing method and apparatus. The method includes: receiving, by an agent node, a first ciphertext sent by a user agent, where the first ciphertext is obtained by encrypting service information by the user agent by using a first key; decrypting, by the agent node, the first ciphertext by using a second key, to obtain the service information; and sending, by the agent node, the service information to a service processing system, so that the service processing system processes the service information according to a value-added service, and triggers a process of sending the processed service information to a network server, where the first key and the second key are keys agreed on between the user agent and the agent node when the user agent and the agent node establish an encrypted connection. The present invention resolves a problem that a service processing system cannot decrypt a ciphertext, and consequently the service processing system cannot provide a value-added service to a user agent using the SSL/TLS protocol, and expands a use range of the value-added service.

## Description

This application claims priority to Patent Application No. PCT/CN2015/070664, filed with the Chinese Patent Office on January 14, 2015 and entitled "SERVICE PROCESSING METHOD AND APPARATUS", which is incorporated herein by reference in its entirety.

### TECHNICAL FIELD

The present invention relates to the communications field, and in particular, to a service processing method and apparatus.

### BACKGROUND

An intermediate agent node is a portal site, and is equivalent to an Internet access gateway. Each portal site generally has a search engine that is used by a user to search for another website that the user intends to access. Generally, the intermediate agent node provides a web page including an input box, the user enters, into the input box, a URL of the website that the user intends to access, and the intermediate agent node forwards a website access request triggered by the user, and forwards answer data of the website to the user. The intermediate agent node may be a portal.

The security socket layer (English: security socket layer; SSL for short) protocol and a successor: the transport layer security (English: transport layer security; TLS for short) protocol of the security socket layer are used to provide services such as encryption, identity authentication and data integrity to network communication, and are already widely applied to security communication between a browser and a network server. The SSL/TLS protocol is located between the transmission control protocol (English: transmission control protocol; TCP for short) protocol of a transport layer and the hypertext transfer protocol (English: hypertext transfer protocol; HTTP for short) of an application layer.

A service processing method provided in a related technology includes: a user agent (English: user agent; UA for short) establishes a network connection to the Internet by using an intermediate agent node, the user agent sends service information to the intermediate agent node, and the intermediate agent node sends the service information to a network server; and the intermediate agent node receives service data returned by the network server, and then sends the service data to the user agent. The service information may be used to request a web page of the network server, and may also be used to request an object in the network server.

In a scenario in which the intermediate agent node exists, when the SSL/TLS protocol is used at a transport layer, a ciphertext obtained through encryption is transmitted between the user agent and the intermediate agent node, and between the intermediate agent node and the network server. A service processing system located between the user agent and the network server cannot decrypt the ciphertext, and consequently the service processing system cannot provide a value-added service to the user agent. The service processing system may be a GI-local area network (English: GI-Local Area Network; GI-LAN for short), and the GI-LAN refers to a network after a GI interface and before the Internet, and is formed by service enablement units having different functions. Different service enablement units may be connected in series to form a service link, and the service link is used to provide a value-added service. For example, service enablement units having a cache function and service enablement units having a firewall function are sequentially connected in series to form a service link of a video service.

### SUMMARY

To resolve a problem that a service processing system cannot decrypt a ciphertext, and consequently the service processing system cannot provide a value-added service to a user agent using the SSL/TLS protocol, embodiments of the present invention provide a service processing method and apparatus. The technical solutions are as follows:

According to a first aspect, a service processing method is provided, where the method includes:
receiving, by an agent node, a first ciphertext sent by a user agent, where the first ciphertext is obtained by encrypting service information by the user agent by using a first key;
decrypting, by the agent node, the first ciphertext by using a second key, to obtain the service information; and
sending, by the agent node, the service information to a service processing system, so that the service processing system processes the service information according to a value-added service, and triggers a process of sending the processed service information to a network server, where
the first key and the second key are keys agreed on between the user agent and the agent node when the user agent and the agent node establish an encrypted connection.

In a first possible implementation manner of the first aspect, the agent node is an intermediate agent node, and after the sending, by the agent node, the service information to a service processing system, the method further includes:
receiving, by the intermediate agent node, the processed service information sent by the service processing system;
establishing, by the intermediate agent node, an encrypted connection to the network server, and agreeing on a third key and a fourth key with the network server;
encrypting, by the intermediate agent node, the service information by using the third key, to obtain a second ciphertext; and
sending, by the intermediate agent node, the second ciphertext to the network server, so that the network server decrypts the second ciphertext by using the fourth key, to obtain the service information.

According to the first possible implementation manner of the first aspect, in a second possible implementation manner of the first aspect, after the sending, by the intermediate agent node, the second ciphertext to the network server, the method further includes:
receiving, by the intermediate agent node, a third ciphertext sent by the network server, where the third ciphertext is obtained by encrypting service data by the network server by using the fourth key;
decrypting, by the intermediate agent node, the third ciphertext by using the third key, to obtain the service data;
sending, by the intermediate agent node, the service data to the service processing system, so that the service processing system processes the service data according to a value-added service, and sends the processed service data to the intermediate agent node;
encrypting, by the intermediate agent node, the processed service data by using the second key, to obtain a fourth ciphertext; and
sending, by the intermediate agent node, the fourth ciphertext to the user agent, so that the user agent decrypts the fourth ciphertext by using the first key, to obtain the service data.

According to the first possible implementation manner of the first aspect or the second possible implementation manner of the first aspect, in a third possible implementation manner of the first aspect, before the receiving, by an agent node, a first ciphertext sent by a user agent, the method further includes:
intercepting, by the intermediate agent node, a first access request sent by the user agent to the network server, instructing the user agent to send a first connection establishment request, and establishing the encrypted connection to the user agent according to the first connection establishment request sent by the user agent, where the first access request is used to request to access the network server; or
receiving, by the intermediate agent node, a first connection establishment request sent by the user agent, and establishing the encrypted connection to the user agent according to the first connection establishment request sent by the user agent, where the first connection establishment request is sent by the user agent after the user agent receives a trigger signal triggered by a user, and the trigger signal is generated after the user triggers a web page of the intermediate agent node that is pre-stored in the user agent.

According to the third possible implementation manner of the first aspect, in a fourth possible implementation manner of the first aspect, the instructing the user agent to send a first connection establishment request includes:
instructing, by using a redirection response, the user agent to send the first connection establishment request.

According to the fourth possible implementation manner of the first aspect, in a fifth possible implementation manner of the first aspect,
the redirection response includes a URL of the intermediate agent node, or
the redirection response includes an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

According to the fifth possible implementation manner of the first aspect, in a sixth possible implementation manner of the first aspect, when the redirection response includes the URL of the intermediate agent node, after the establishing, by the intermediate agent node, the encrypted connection to the user agent according to the first connection establishment request sent by the user agent, the method further includes:
receiving, by the intermediate agent node, a fifth ciphertext sent by the user agent, where the fifth ciphertext is obtained by encrypting a second access request by the user agent by using the first key, and the second access request is used to request to access the intermediate agent node;
decrypting, by the intermediate agent node, the fifth ciphertext by using the second key, to obtain the second access request;
obtaining, by the intermediate agent node, the web page of the intermediate agent node;
encrypting, by the intermediate agent node, the web page by using the second key, to obtain a sixth ciphertext; and
sending, by the intermediate agent node, the sixth ciphertext to the user agent, so that the user agent decrypts the sixth ciphertext by using the first key, to obtain the web page, and the web page is used to trigger the user agent to send the first ciphertext.

In a seventh possible implementation manner of the first aspect, the agent node is a front-end agent node located between the user agent and an intermediate agent node, and after the sending, by the agent node, the service information to a service processing system, the method further includes:
receiving, by the front-end agent node, service data sent by the service processing system;
encrypting, by the front-end agent node, the service data by using the second key, to obtain a seventh ciphertext; and
sending, by the front-end agent node, the seventh ciphertext to the user agent, so that the user agent decrypts the seventh ciphertext by using the first key, to obtain the service data.

According to the seventh possible implementation manner of the first aspect, in an eighth possible implementation manner of the first aspect, before the receiving, by an agent node, a first ciphertext sent by a user agent, the method further includes:
intercepting, by the front-end agent node, a second connection establishment request sent by the user agent to the intermediate agent node, where the second connection establishment request includes a destination Internet Protocol IP address of the intermediate agent node; and
establishing, by the front-end agent node, the encrypted connection to the user agent according to the destination IP address and pre-stored node information of the intermediate agent node.

According to the eighth possible implementation manner of the first aspect, in a ninth possible implementation manner of the first aspect,
after the intermediate agent node intercepts a first access request sent by the user agent to the network server, the intermediate agent node instructs, by using a redirection response, the user agent to send the second connection establishment request, where the first access request is used to request to access the network server, or
the second connection establishment request is sent by the user agent after the user agent receives a trigger signal triggered by a user, and the trigger signal is generated after the user triggers a web page of the intermediate agent node that is pre-stored in the user agent.

According to the ninth possible implementation manner of the first aspect, in a tenth possible implementation manner of the first aspect, when the intermediate agent node instructs, by using a redirection response, the user agent to send the second connection establishment request after the intermediate agent node intercepts the first access request,
the redirection response includes a URL of the intermediate agent node; or
the redirection response includes an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

According to the tenth possible implementation manner of the first aspect, in an eleventh possible implementation manner of the first aspect, when the redirection response includes the URL of the intermediate agent node,
after the establishing, by the front-end agent node, the encrypted connection to the user agent according to the destination IP address and pre-stored node information of the intermediate agent node, the method further includes:
   receiving, by the front-end agent node, a fifth ciphertext sent by the user agent, where the fifth ciphertext is obtained by encrypting a second access request by the user agent by using the first key, and the second access request is used to request to access the intermediate agent node;
   decrypting, by the front-end agent node, the fifth ciphertext by using the second key, to obtain the second access request;
   sending, by the front-end agent node, the second access request to the service processing system, so that the service processing system processes the second access request according to a value-added service, and sends the processed second access request to the intermediate agent node;
   encrypting, by the front-end agent node by using the second key, a web page sent by the service processing system, to obtain a sixth ciphertext, where the web page is sent by the intermediate agent node to the service processing system; and
   sending, by the front-end agent node, the sixth ciphertext to the user agent, so that the user agent decrypts the sixth ciphertext by using the first key, to obtain the web page, and the web page is used to trigger the user agent to send the first ciphertext.

According to the eighth possible implementation manner of the first aspect, the ninth possible implementation manner of the first aspect, the tenth possible implementation manner of the first aspect or the eleventh possible implementation manner of the first aspect, in a twelfth possible implementation manner of the first aspect, the establishing, by the front-end agent node, the encrypted connection to the user agent according to the destination IP address and pre-stored node information of the intermediate agent node includes:
if the node information includes a digital certificate and a private key, sending, by the front-end agent node, the digital certificate to the user agent, receiving encrypted information that is sent by the user agent according to a public key carried in the digital certificate, decrypting the encrypted information by using the private key to obtain a pre-master key, and establishing the encrypted connection to the user agent by using the destination IP address; or
if the node information includes a digital certificate, sending, by the front-end agent node, the digital certificate to the user agent, receiving encrypted information that is sent by the user agent according to a public key carried in the digital certificate, sending the encrypted information to the intermediate agent node, receiving a pre-master key that is sent after the intermediate agent node decrypts the encrypted information by using a private key, and establishing the encrypted connection to the user agent by using the destination IP address, where
the pre-master key is used to generate the first key and the second key.

According to the third possible implementation manner of the first aspect, in a thirteenth possible implementation manner of the first aspect,
before the intercepting, by the intermediate agent node, a first access request sent by the user agent to the network server, the method further includes:
   intercepting, by the intermediate agent node, a transmission control protocol TCP connection request sent by the user agent to the network server; and
   reading, by the intermediate agent node, information in the TCP connection request, replacing the network server according to the information to establish a TCP connection to the user agent, and after establishment of the TCP connection is completed, establishing an encrypted agent connection to the user agent by using a pre-stored digital certificate corresponding to the network server, where the encrypted agent connection is used by the user agent to send the first access request to the network server.

According to the thirteenth possible implementation manner of the first aspect, in a fourteenth possible implementation manner of the first aspect, the establishing an encrypted agent connection to the user agent by using a pre-stored digital certificate corresponding to the network server includes:
sending, by the intermediate agent node, a first digital certificate to the user agent, where the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or
sending, by the intermediate agent node, a third digital certificate and a fourth digital certificate to the user agent, where the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds.

According to the ninth possible implementation manner of the first aspect, in a fifteenth possible implementation manner of the first aspect, after the intermediate agent node intercepts, by using an encrypted agent connection, the first access request sent by the user agent to the network server, the intermediate agent node instructs the user agent to send the second connection establishment request, and the encrypted agent connection is established with the user agent by using a pre-stored digital certificate corresponding to the network server after the intermediate agent node intercepts a TCP connection request sent by the user agent to the network server, reads information in the TCP connection request, and replaces, according to the information, the network server to establish a TCP connection to the user agent, and after establishment of the TCP connection is completed.

According to a second aspect, a service processing apparatus is provided and applied to an agent node, where the apparatus includes:
a first receiving module, configured to receive a first ciphertext sent by a user agent, where the first ciphertext is obtained by encrypting service information by the user agent by using a first key;
a first decryption module, configured to decrypt, by using a second key, the first ciphertext received by the first receiving module, to obtain the service information; and
a first sending module, configured to send the service information obtained through decryption of the first decryption module to a service processing system, so that the service processing system processes the service information according to a value-added service, and triggers a process of sending the processed service information to a network server, where
the first key and the second key are keys agreed on between the user agent and the agent node when the user agent and the agent node establish an encrypted connection.

In a first possible implementation manner of the second aspect, the agent node is an intermediate agent node, and the apparatus further includes:
a second receiving module, configured to: after the first sending module sends the service information to the service processing system, receive the processed service information sent by the service processing system;
a key agreeing-on module, configured to establish an encrypted connection to the network server, and agree on a third key and a fourth key with the network server;
a first encryption module, configured to encrypt the service information by using the third key that is agreed on by the key agreeing-on module, to obtain a second ciphertext; and
a second sending module, configured to send the second ciphertext obtained through encryption of the first encryption module to the network server, so that the network server decrypts the second ciphertext by using the fourth key, to obtain the service information.

According to the first possible implementation manner of the second aspect, in a second possible implementation manner of the second aspect, the apparatus further includes:
a third receiving module, configured to: after the second sending module sends the second ciphertext to the network server, receive a third ciphertext sent by the network server, where the third ciphertext is obtained by encrypting service data by the network server by using the fourth key;
a second decryption module, configured to decrypt, by using the third key, the third ciphertext received by the third receiving module, to obtain the service data;
a third sending module, configured to send the service data obtained through decryption of the second decryption module to the service processing system, so that the service processing system processes the service data according to a value-added service, and sends the processed service data to the intermediate agent node;
a second encryption module, configured to encrypt the processed service data by using the second key, to obtain a fourth ciphertext; and
a fourth sending module, configured to send the fourth ciphertext obtained through encryption of the second encryption module to the user agent, so that the user agent decrypts the fourth ciphertext by using the first key, to obtain the service data.

According to the first possible implementation manner of the second aspect or the second possible implementation manner of the second aspect, in a third possible implementation manner of the second aspect, the apparatus further includes:
a first establishment module, configured to: before the first receiving module receives the first ciphertext sent by the user agent, intercept a first access request sent by the user agent to the network server, instruct the user agent to send a first connection establishment request, and establish the encrypted connection to the user agent according to the first connection establishment request sent by the user agent, where the first access request is used to request to access the network server; or
a second establishment module, configured to: before the first receiving module receives the first ciphertext sent by the user agent, receive a first connection establishment request sent by the user agent, and establish the encrypted connection to the user agent according to the first connection establishment request sent by the user agent, where the first connection establishment request is sent by the user agent after the user agent receives a trigger signal triggered by a user, and the trigger signal is generated after the user triggers a web page of the intermediate agent node that is pre-stored in the user agent.

According to the third possible implementation manner of the second aspect, in a fourth possible implementation manner of the second aspect, the first establishment module is specifically configured to instruct, by using a redirection response, the user agent to send the first connection establishment request.

According to the fourth possible implementation manner of the second aspect, in a fifth possible implementation manner of the second aspect,
the redirection response includes a URL of the intermediate agent node, or
the redirection response includes an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

According to the fifth possible implementation manner of the second aspect, in a sixth possible implementation manner of the second aspect, when the redirection response includes the URL of the intermediate agent node, the apparatus further includes:
a fourth receiving module, configured to: after the first establishment module establishes the encrypted connection to the user agent according to the first connection establishment request sent by the user agent, receive a fifth ciphertext sent by the user agent, where the fifth ciphertext is obtained by encrypting a second access request by the user agent by using the first key, and the second access request is used to request to access the intermediate agent node;
a third decryption module, configured to decrypt, by using the second key, the fifth ciphertext received by the fifth receiving module, to obtain the second access request;
a web page obtaining module, configured to obtain the web page of the intermediate agent node;
a third encryption module, configured to encrypt, by using the second key, the web page obtained by the web page obtaining module, to obtain a sixth ciphertext; and
a fifth sending module, configured to send the sixth ciphertext obtained through encryption of the third encryption module to the user agent, so that the user agent decrypts the sixth ciphertext by using the first key, to obtain the web page, and the web page is used to trigger the user agent to send the first ciphertext.

In a seventh possible implementation manner of the second aspect, the agent node is a front-end agent node located between the user agent and an intermediate agent node, and the apparatus further includes:
a fifth receiving module, configured to: after the first sending module sends the service information to the service processing system, receive service data sent by the service processing system;
a fourth encryption module, configured to encrypt, by using the second key, the service data received by the fifth receiving module, to obtain a seventh ciphertext; and
a sixth sending module, configured to send the seventh ciphertext obtained through encryption of the fourth encryption module to the user agent, so that the user agent decrypts the seventh ciphertext by using the first key, to obtain the service data.

According to the seventh possible implementation manner of the second aspect, in an eighth possible implementation manner of the second aspect, the apparatus further includes:
a request interception module, configured to: before the first receiving module receives the first ciphertext sent by the user agent, intercept a second connection establishment request sent by the user agent to the intermediate agent node, where the second connection establishment request includes a destination Internet Protocol IP address of the intermediate agent node, after the intermediate agent node intercepts a first access request sent by the user agent to the network server, the intermediate agent node instructs, by using a redirection response, the user agent to send the second connection establishment request, where the first access request is used to request to access the network server, or the second connection establishment request is sent by the user agent after the user agent receives a trigger signal triggered by a user, and the trigger signal is generated after the user triggers a web page of the intermediate agent node that is pre-stored in the user agent; and
a third establishment module, configured to establish the encrypted connection to the user agent according to the destination IP address and pre-stored node information of the intermediate agent node.

According to the eighth possible implementation manner of the second aspect, in a ninth possible implementation manner of the second aspect,
after the intermediate agent node intercepts a first access request sent by the user agent to the network server, the intermediate agent node instructs the user agent to send the second connection establishment request, where the first access request is used to request to access the network server, or
the second connection establishment request is sent by the user agent after the user agent receives a trigger signal triggered by a user, and the trigger signal is generated after the user triggers a web page of the intermediate agent node that is pre-stored in the user agent.

According to the ninth possible implementation manner of the second aspect, in a tenth possible implementation manner of the second aspect, when the intermediate agent node instructs, by using a redirection response, the user agent to send the second connection establishment request after the intermediate agent node intercepts the first access request,
the redirection response includes a URL of the intermediate agent node; or
the redirection response includes an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

According to the tenth possible implementation manner of the second aspect, in an eleventh possible implementation manner of the second aspect, when the redirection response includes the URL of the intermediate agent node, the apparatus further includes:
a sixth receiving module, configured to: after the third establishment module establishes the encrypted connection to the user agent according to the destination IP address and the pre-stored node information of the intermediate agent node, receive a fifth ciphertext sent by the user agent, where the fifth ciphertext is obtained by encrypting a second access request by the user agent by using the first key, and the second access request is used to request to access the intermediate agent node;
a fourth decryption module, configured to decrypt, by using the second key, the fifth ciphertext received by the sixth receiving module, to obtain the second access request;
a seventh sending module, configured to send the second access request obtained through decryption of the fourth decryption module to the service processing system, so that the service processing system processes the second access request according to a value-added service, and sends the processed second access request to the intermediate agent node;
a fifth encryption module, configured to encrypt, by using the second key, a web page sent by the service processing system, to obtain a sixth ciphertext, where the web page is sent by the intermediate agent node to the service processing system; and
an eighth sending module, configured to send the sixth ciphertext obtained through encryption of the fifth encryption module to the user agent, so that the user agent decrypts the sixth ciphertext by using the first key, to obtain the web page, and the web page is used to trigger the user agent to send the first ciphertext.

According to the eighth possible implementation manner of the second aspect, the ninth possible implementation manner of the second aspect, the tenth possible implementation manner of the second aspect or the eleventh possible implementation manner of the second aspect, in a twelfth possible implementation manner of the second aspect, the third establishment module is specifically configured to:
if the node information includes a digital certificate and a private key, send the digital certificate to the user agent, receive encrypted information that is sent by the user agent according to a public key carried in the digital certificate, decrypt the encrypted information by using the private key to obtain a pre-master key, and establish the encrypted connection to the user agent by using the destination IP address; or
if the node information includes a digital certificate, send the digital certificate to the user agent, receive encrypted information that is sent by the user agent according to a public key carried in the digital certificate, send the encrypted information to the intermediate agent node, receive a pre-master key that is sent after the intermediate agent node decrypts the encrypted information by using a private key, and establish the encrypted connection to the user agent by using the destination IP address, where
the pre-master key is used to generate the first key and the second key.

According to the third possible implementation manner of the second aspect, in a thirteenth possible implementation manner of the second aspect, the apparatus further includes:
a request obtaining module, configured to: before the first establishment module intercepts the first access request sent by the user agent to the network server, intercept a transmission control protocol TCP connection request sent by the user agent to the network server; and
a fourth establishment module, configured to read information in the TCP connection request, replace the network server according to the information to establish a TCP connection to the user agent, and after establishment of the TCP connection is completed, establish an encrypted agent connection to the user agent by using a pre-stored digital certificate corresponding to the network server, where the encrypted agent connection is used by the user agent to send the first access request to the network server.

According to the thirteenth possible implementation manner of the second aspect, in a fourteenth possible implementation manner of the second aspect, the fourth establishment module is specifically configured to:
send a first digital certificate to the user agent, where the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or
send a third digital certificate and a fourth digital certificate to the user agent, where the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds.

According to the ninth possible implementation manner of the second aspect, in a fifteenth possible implementation manner of the second aspect, after the intermediate agent node intercepts, by using an encrypted agent connection, the first access request sent by the user agent to the network server, the intermediate agent node instructs the user agent to send the second connection establishment request, and the encrypted agent connection is established with the user agent by using a pre-stored digital certificate corresponding to the network server after the intermediate agent node intercepts a TCP connection request sent by the user agent to the network server, reads information in the TCP connection request, and replaces, according to the information, the network server to establish a TCP connection to the user agent, and after establishment of the TCP connection is completed.

According to a third aspect, a service processing apparatus is provided and applied to an agent node, where the apparatus includes: a bus, and a processor, a memory, a transmitter and a receiver that are connected to the bus, where the memory is configured to store several instructions, and the instructions are configured to be executed by the processor;
the receiver is configured to receive a first ciphertext sent by a user agent, where the first ciphertext is obtained by encrypting service information by the user agent by using a first key;
the processor is configured to decrypt, by using a second key, the first ciphertext received by the receiver, to obtain the service information; and
the transmitter is configured to send the service information obtained through decryption of the processor to a service processing system, so that the service processing system processes the service information according to a value-added service, and triggers a process of sending the processed service information to a network server, where
the first key and the second key are keys agreed on between the user agent and the agent node when the user agent and the agent node establish an encrypted connection.

In a first possible implementation manner of the third aspect, the agent node is an intermediate agent node, and
the receiver is further configured to: after the transmitter sends the service information to the service processing system, receive the processed service information sent by the service processing system;
the processor is further configured to establish an encrypted connection to the network server, and agree on a third key and a fourth key with the network server; and encrypt the service information by using the third key, to obtain a second ciphertext; and
the transmitter is further configured to send the second ciphertext obtained through encryption of the processor to the network server, so that the network server decrypts the second ciphertext by using the fourth key, to obtain the service information.

According to the first possible implementation manner of the third aspect, in a second possible implementation manner of the third aspect,
the receiver is further configured to: after the transmitter sends the second ciphertext to the network server, receive a third ciphertext sent by the network server, where the third ciphertext is obtained by encrypting service data by the network server by using the fourth key;
the processor is further configured to decrypt, by using the third key, the third ciphertext received by the receiver, to obtain the service data;
the transmitter is further configured to send the service data obtained through decryption of the processor to the service processing system, so that the service processing system processes the service data according to a value-added service, and sends the processed service data to the intermediate agent node;
the processor is further configured to encrypt the processed service data by using the second key, to obtain a fourth ciphertext; and
the transmitter is further configured to send the fourth ciphertext obtained through encryption of the processor to the user agent, so that the user agent decrypts the fourth ciphertext by using the first key, to obtain the service data.

According to the first possible implementation manner of the third aspect or the second possible implementation manner of the third aspect, in a third possible implementation manner of the third aspect,
the receiver is further configured to: before receiving the first ciphertext sent by the user agent, intercept a first access request sent by the user agent to the network server, the transmitter is further configured to instruct the user agent to send a first connection establishment request, and the processor is further configured to establish the encrypted connection to the user agent according to the first connection establishment request sent by the user agent, where the first access request is used to request to access the network server; or
the receiver is further configured to: before receiving the first ciphertext sent by the user agent, receive a first connection establishment request sent by the user agent, and the processor is further configured to establish the encrypted connection to the user agent according to the first connection establishment request sent by the user agent, where the first connection establishment request is sent by the user agent after the user agent receives a trigger signal triggered by a user, and the trigger signal is generated after the user triggers a web page of the intermediate agent node that is pre-stored in the user agent.

According to the third possible implementation manner of the third aspect, in a fourth possible implementation manner of the third aspect, the transmitter is specifically configured to instruct, by using a redirection response, the user agent to send the first connection establishment request.

According to the fourth possible implementation manner of the third aspect, in a fifth possible implementation manner of the third aspect,
the redirection response includes a URL of the intermediate agent node, or
the redirection response includes an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

According to the fifth possible implementation manner of the third aspect, in a sixth possible implementation manner of the third aspect, when the redirection response includes the URL of the intermediate agent node,
the receiver is further configured to: after the processor establishes the encrypted connection to the user agent according to the first connection establishment request sent by the user agent, receive a fifth ciphertext sent by the user agent, where the fifth ciphertext is obtained by encrypting a second access request by the user agent by using the first key, and the second access request is used to request to access the intermediate agent node;
the processor is further configured to decrypt, by using the second key, the fifth ciphertext received by the receiver, to obtain the second access request; obtain the web page of the intermediate agent node; and encrypt the web page by using the second key, to obtain a sixth ciphertext; and
the transmitter is further configured to send the sixth ciphertext obtained through encryption of the processor to the user agent, so that the user agent decrypts the sixth ciphertext by using the first key, to obtain the web page, and the web page is used to trigger the user agent to send the first ciphertext.

In a seventh possible implementation manner of the third aspect, the agent node is a front-end agent node located between the user agent and an intermediate agent node,
the receiver is further configured to: after the transmitter sends the service information to the service processing system, receive service data sent by the service processing system;
the processor is further configured to encrypt, by using the second key, the service data received by the receiver, to obtain a seventh ciphertext; and
the transmitter is further configured to send the seventh ciphertext obtained through encryption of the processor to the user agent, so that the user agent decrypts the seventh ciphertext by using the first key, to obtain the service data.

According to the seventh possible implementation manner of the third aspect, in an eighth possible implementation manner of the third aspect,
the receiver is further configured to: before receiving the first ciphertext sent by the user agent, intercept a second connection establishment request sent by the user agent to the intermediate agent node, where the second connection establishment request includes a destination Internet Protocol IP address of the intermediate agent node; and
the processor is configured to establish the encrypted connection to the user agent according to the destination IP address and pre-stored node information of the intermediate agent node.

According to the eighth possible implementation manner of the third aspect, in a ninth possible implementation manner of the third aspect,
after the intermediate agent node intercepts a first access request sent by the user agent to the network server, the intermediate agent node instructs the user agent to send the second connection establishment request, where the first access request is used to request to access the network server, or
the second connection establishment request is sent by the user agent after the user agent receives a trigger signal triggered by a user, and the trigger signal is generated after the user triggers a web page of the intermediate agent node that is pre-stored in the user agent.

According to the ninth possible implementation manner of the third aspect, in a tenth possible implementation manner of the third aspect, when the intermediate agent node instructs, by using a redirection response, the user agent to send the second connection establishment request after the intermediate agent node intercepts the first access request,
the redirection response includes a URL of the intermediate agent node; or
the redirection response includes an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

According to the tenth possible implementation manner of the third aspect, in an eleventh possible implementation manner of the third aspect, when the redirection response includes the URL of the intermediate agent node,
the receiver is further configured to: after the processor establishes the encrypted connection to the user agent according to the destination IP address and the pre-stored node information of the intermediate agent node, receive a fifth ciphertext sent by the user agent, where the fifth ciphertext is obtained by encrypting a second access request by the user agent by using the first key, and the second access request is used to request to access the intermediate agent node;
the processor is further configured to decrypt, by using the second key, the fifth ciphertext received by the receiver, to obtain the second access request;
the transmitter is further configured to send the second access request obtained through decryption of the processor to the service processing system, so that the service processing system processes the second access request according to a value-added service, and sends the processed second access request to the intermediate agent node;
the processor is further configured to encrypt, by using the second key, a web page sent by the service processing system, to obtain a sixth ciphertext, where the web page is sent by the intermediate agent node to the service processing system; and
the transmitter is further configured to send the sixth ciphertext obtained through encryption of the processor to the user agent, so that the user agent decrypts the sixth ciphertext by using the first key, to obtain the web page, and the web page is used to trigger the user agent to send the first ciphertext.

According to the eighth possible implementation manner of the third aspect, the ninth possible implementation manner of the third aspect, the tenth possible implementation manner of the third aspect or the eleventh possible implementation manner of the third aspect, in a twelfth possible implementation manner of the third aspect,
if the node information includes a digital certificate and a private key, the transmitter is specifically configured to send the digital certificate to the user agent, the receiver is specifically configured to receive encrypted information that is sent by the user agent according to a public key carried in the digital certificate, and the processor is specifically configured to decrypt the encrypted information by using the private key to obtain a pre-master key, and establish the encrypted connection to the user agent by using the destination IP address; or
if the node information includes a digital certificate, the transmitter is specifically configured to send the digital certificate to the user agent, the receiver is specifically configured to receive encrypted information that is sent by the user agent according to a public key carried in the digital certificate, the transmitter is further configured to send the encrypted information to the intermediate agent node, the receiver is further configured to receive a pre-master key that is sent after the intermediate agent node decrypts the encrypted information by using a private key, and the processor is specifically configured to establish the encrypted connection to the user agent by using the destination IP address, where
the pre-master key is used to generate the first key and the second key.

According to the third possible implementation manner of the third aspect, in a thirteenth possible implementation manner of the third aspect,
the receiver is further configured to: before intercepting the first access request sent by the user agent to the network server, intercept a transmission control protocol TCP connection request sent by the user agent to the network server; and
the processor is further configured to read information in the TCP connection request, replace the network server according to the information to establish a TCP connection to the user agent, and after establishment of the TCP connection is completed, establish an encrypted agent connection to the user agent by using a pre-stored digital certificate corresponding to the network server, where the encrypted agent connection is used by the user agent to send the first access request to the network server.

According to the thirteenth possible implementation manner of the third aspect, in a fourteenth possible implementation manner of the third aspect,
the transmitter is further configured to send a first digital certificate to the user agent, where the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or
the transmitter is further configured to send a third digital certificate and a fourth digital certificate to the user agent, where the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds.

According to the ninth possible implementation manner of the third aspect, in a fifteenth possible implementation manner of the third aspect, after the intermediate agent node intercepts, by using an encrypted agent connection, the first access request sent by the user agent to the network server, the intermediate agent node instructs the user agent to send the second connection establishment request, and the encrypted agent connection is established with the user agent by using a pre-stored digital certificate corresponding to the network server after the intermediate agent node intercepts a TCP connection request sent by the user agent to the network server, reads information in the TCP connection request, and replaces, according to the information, the network server to establish a TCP connection to the user agent, and after establishment of the TCP connection is completed.

Beneficial effects of the technical solutions provided in the embodiments of the present invention are:
A first ciphertext sent by a user agent is received, where the first ciphertext is obtained by encrypting service information by the user agent by using a first key; the first ciphertext is decrypted by using a second key, to obtain the service information; and the service information is sent to a service processing system, so that the service processing system processes the service information according to a value-added service, and triggers a process of sending the processed service information to a network server. When the user agent uses the SSL/TLS protocol, an agent node may decrypt the transmitted first ciphertext, and send the service information obtained through decryption to the service processing system, so as to resolve the problem that the service processing system cannot decrypt a ciphertext, and consequently the service processing system cannot provide a value-added service to the user agent using the SSL/TLS protocol, and expand a use range of the value-added service.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a method flowchart of a service processing method according to an embodiment of the present invention;
FIG. 2 is a method flowchart of another service processing method according to an embodiment of the present invention;
FIG. 3 is a schematic diagram of establishing a TLS connection according to an embodiment of the present invention;

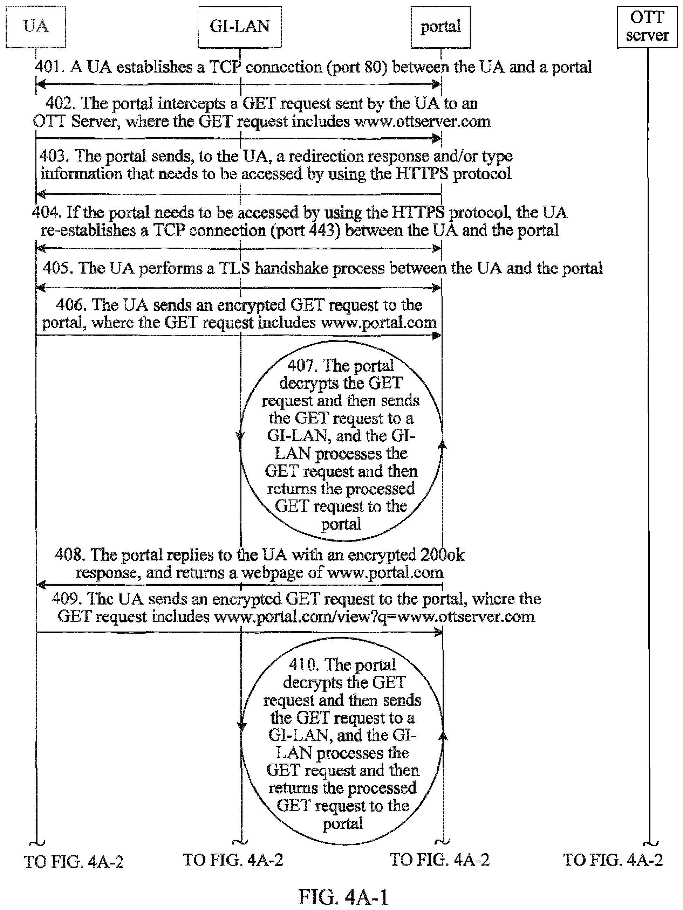

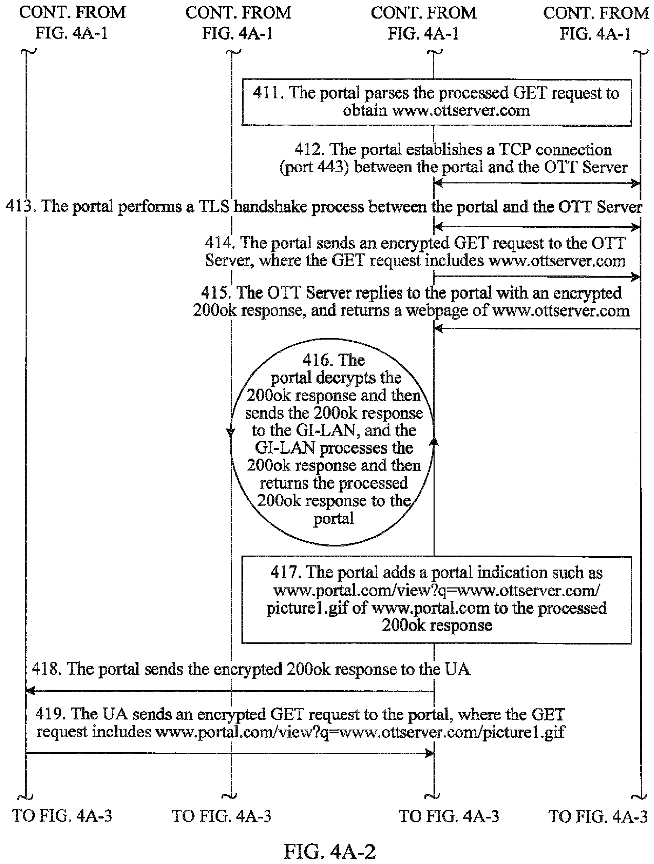

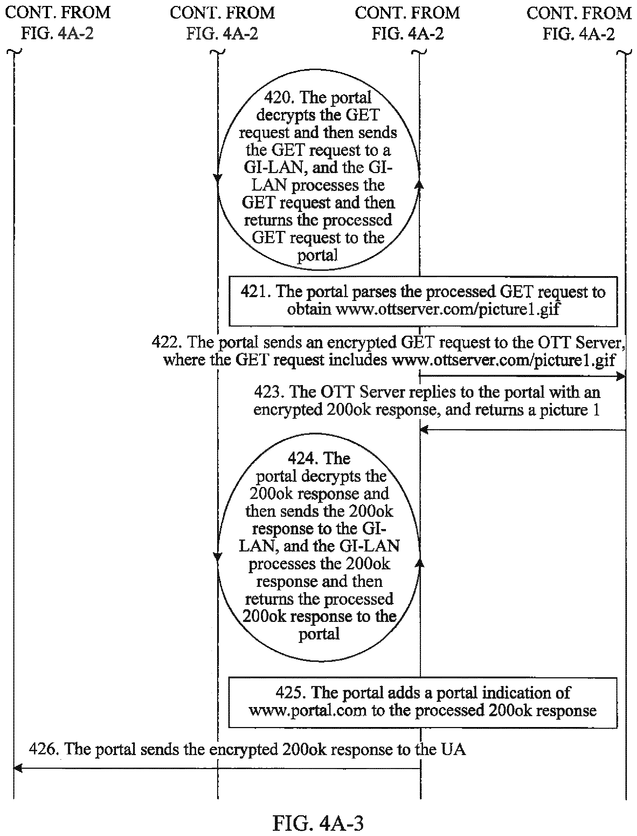

FIG. 4A-1, FIG. 4A-2 and FIG. 4A-3 are an application flowchart of a first service processing method according to an embodiment of the present invention;

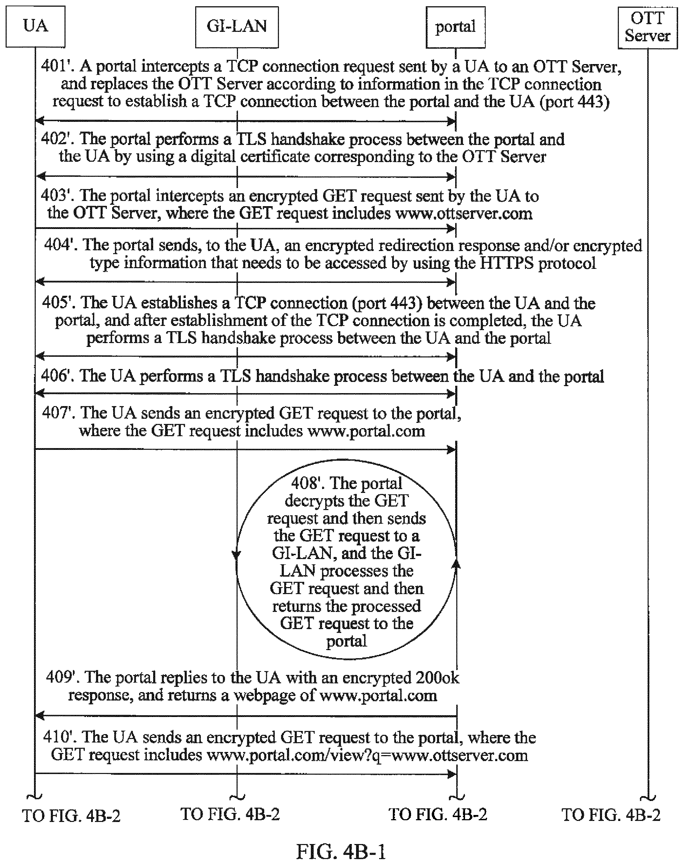

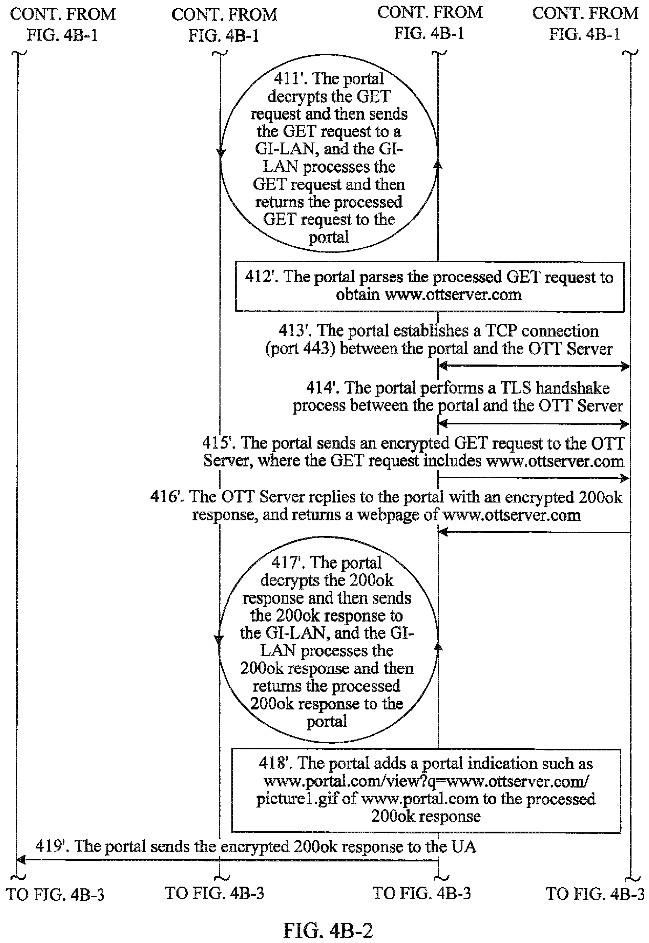

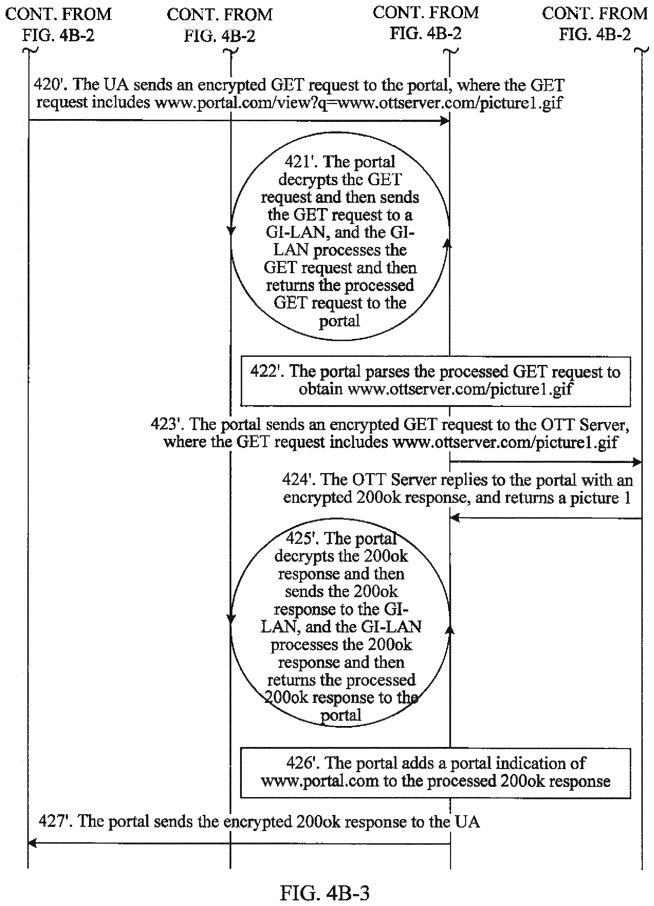

FIG. 4B-1, FIG. 4B-2 and FIG. 4B-3 are an application flowchart of a second service processing method according to an embodiment of the present invention;

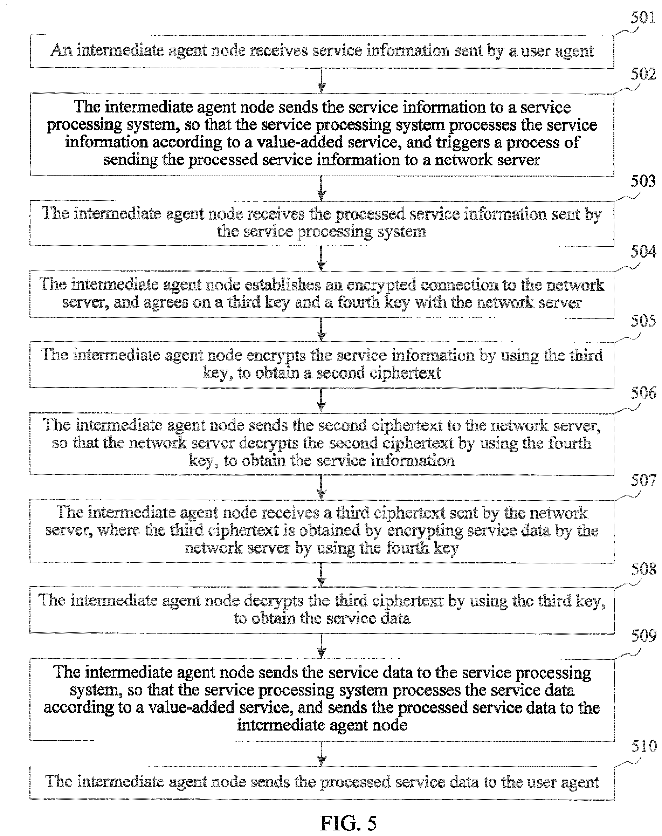

FIG. 5 is a schematic diagram of establishing another encrypted connection according to an embodiment of the present invention;

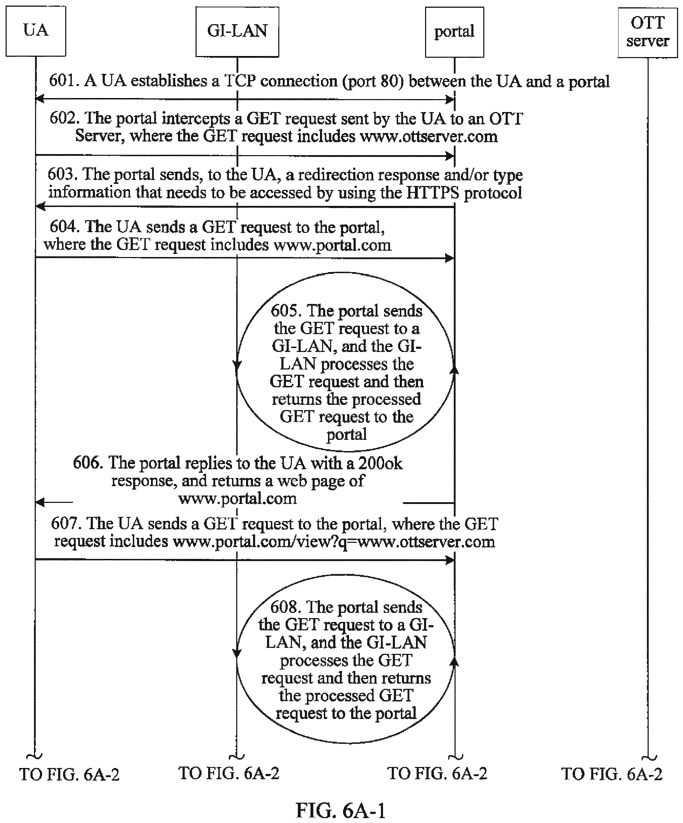

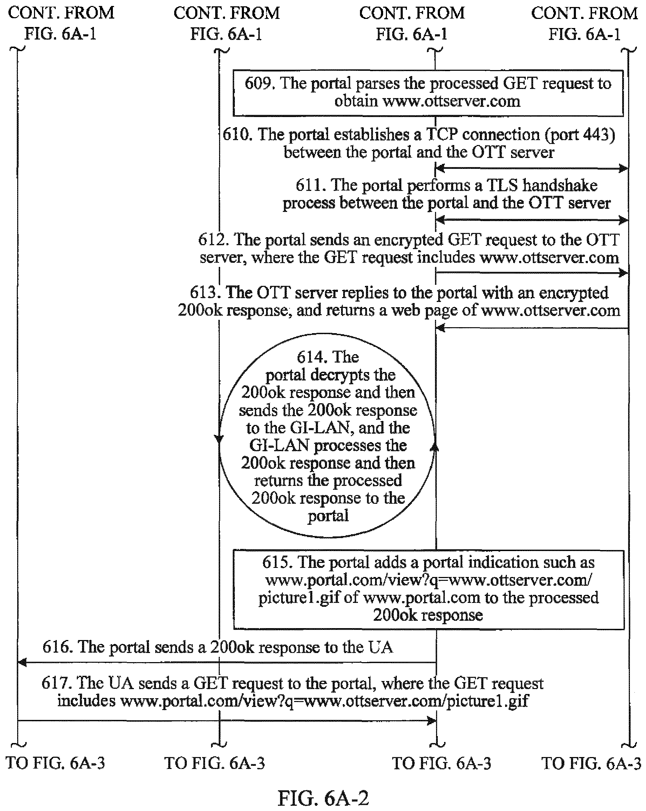

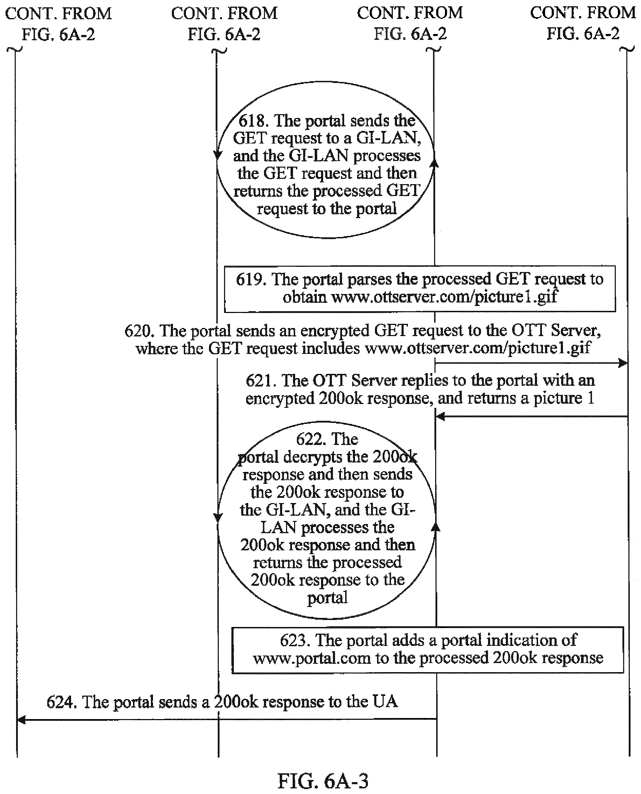

FIG. 6A-1, FIG. 6A-2 and FIG. 6A-3 are an application flowchart of a third service processing method according to an embodiment of the present invention;

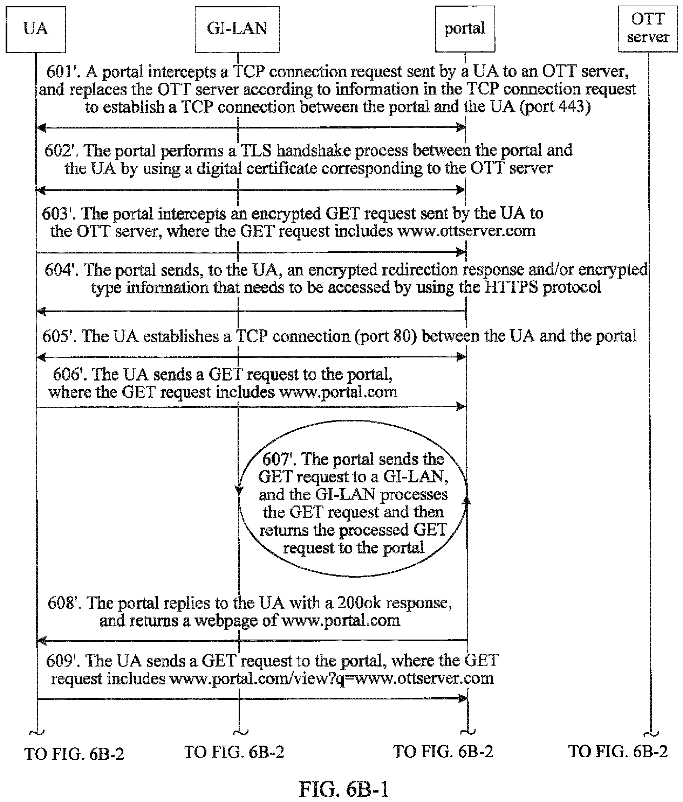

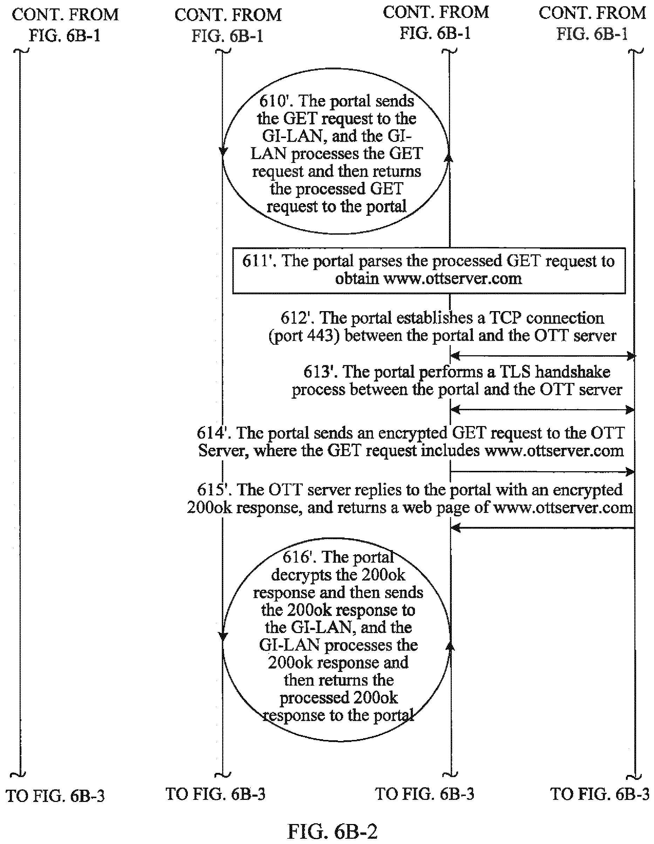

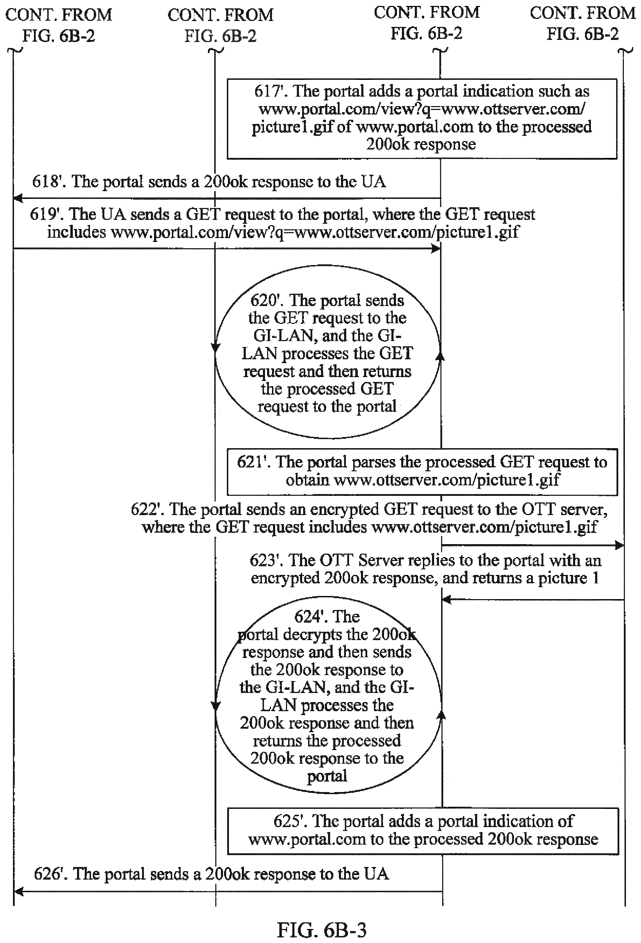

FIG. 6B-1, FIG. 6B-2 and FIG. 6B-3 are an application flowchart of a fourth service processing method according to an embodiment of the present invention;

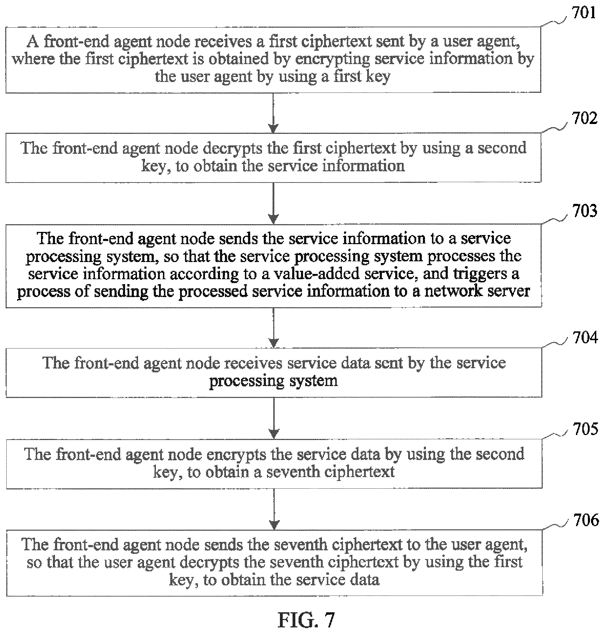

FIG. 7 is a schematic diagram of establishing another encrypted connection according to an embodiment of the present invention;

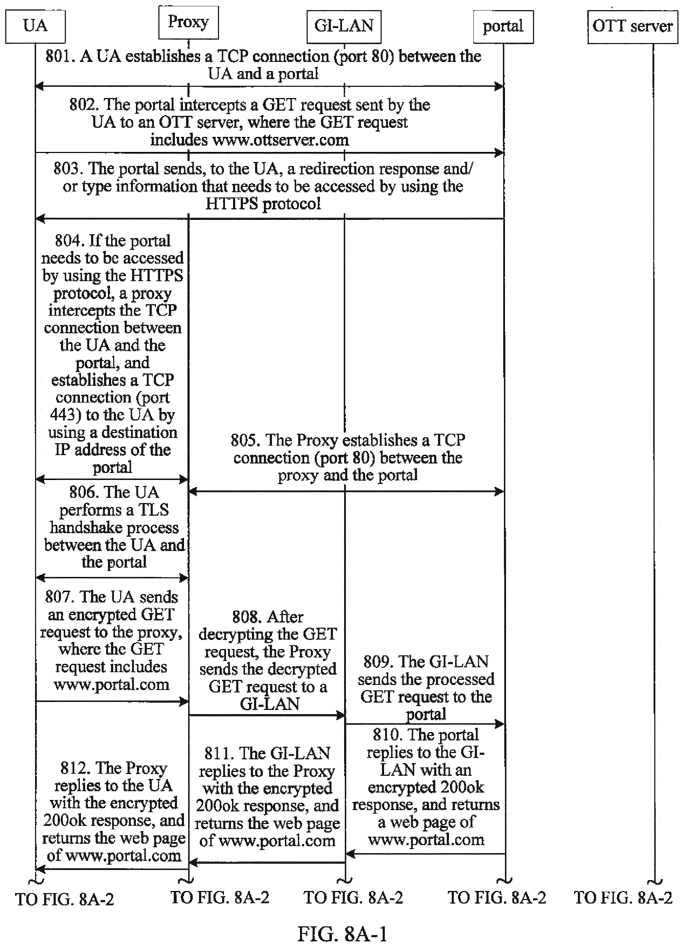

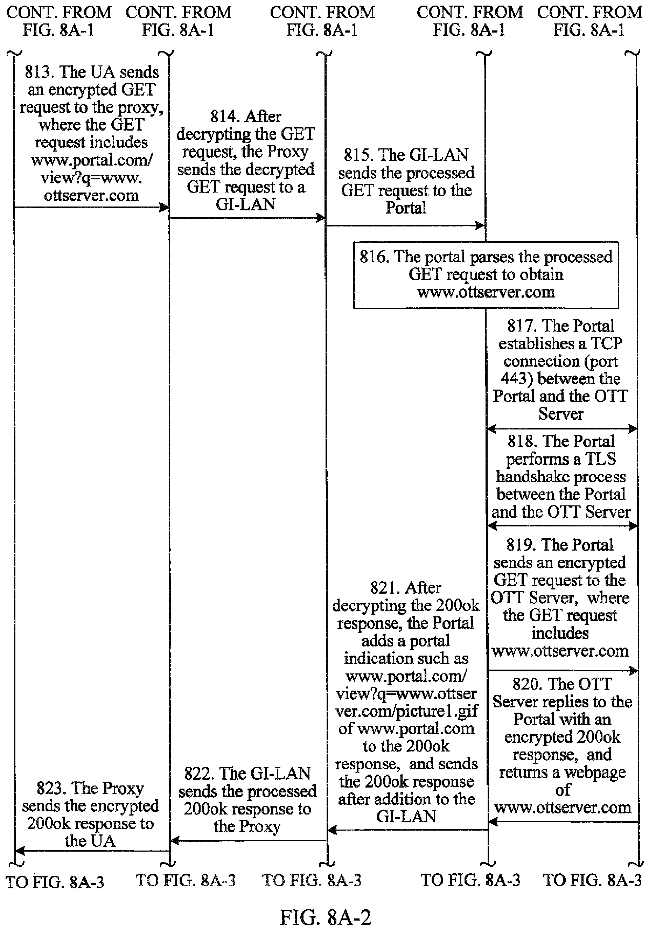

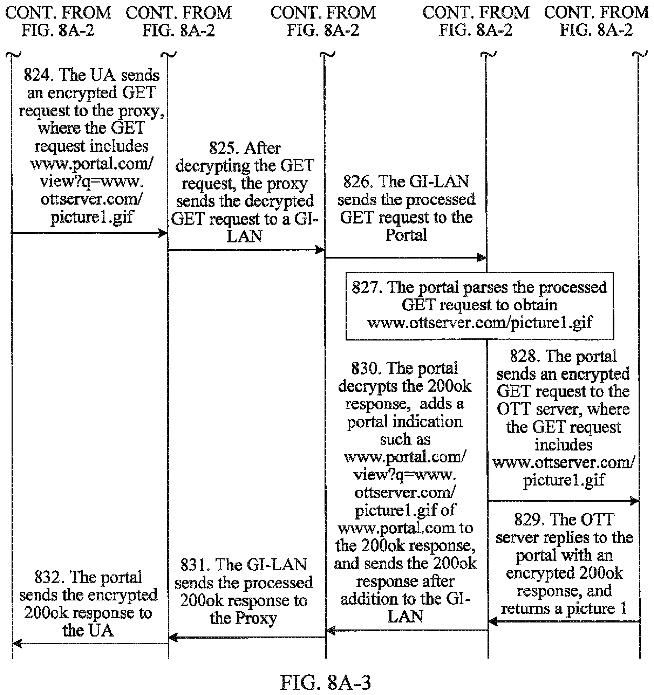

FIG. 8A-1, FIG. 8A-2 and FIG. 8A-3 are an application flowchart of a fifth service processing method according to an embodiment of the present invention;

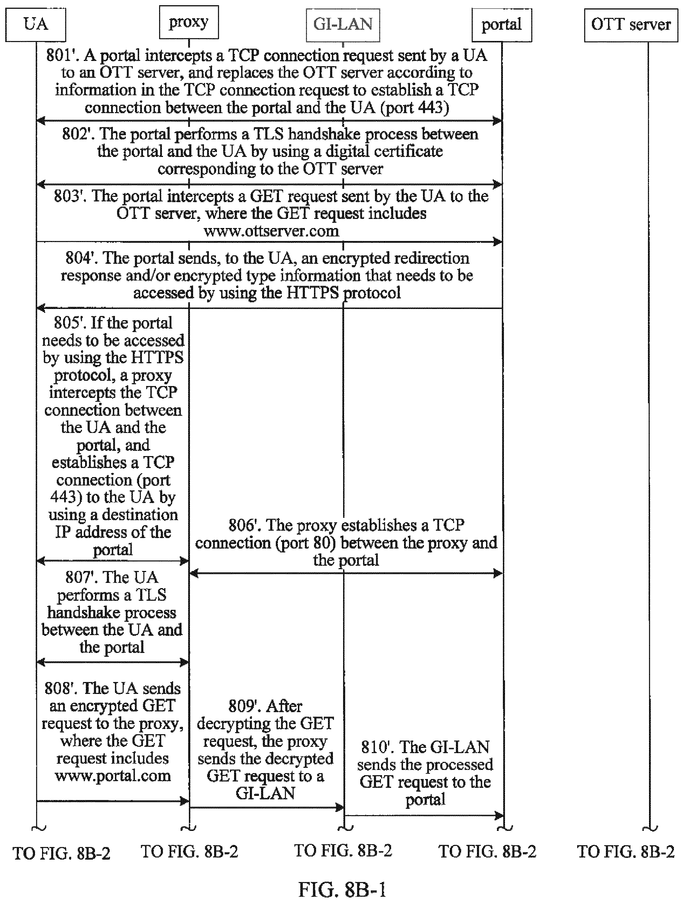

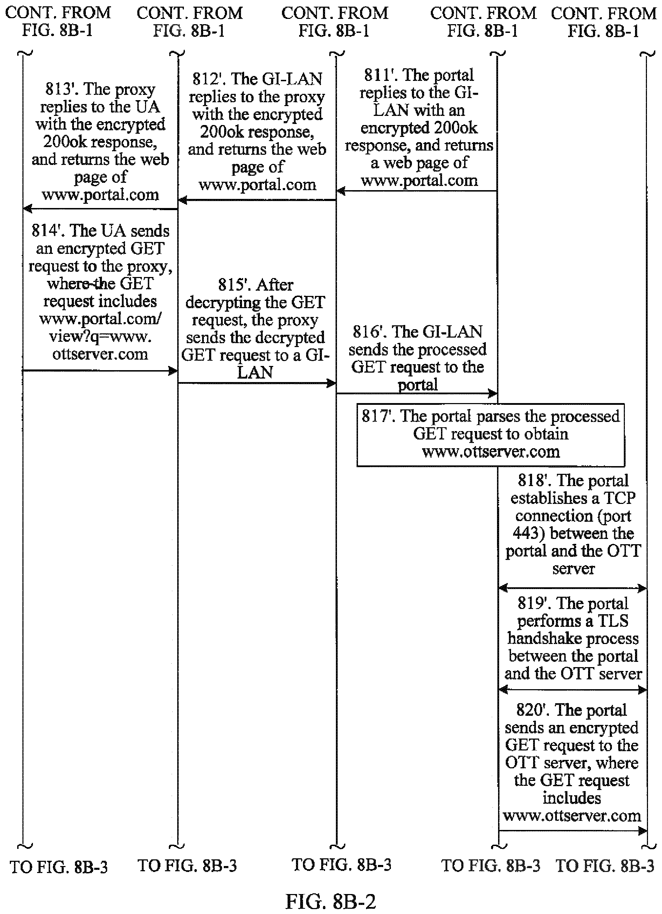

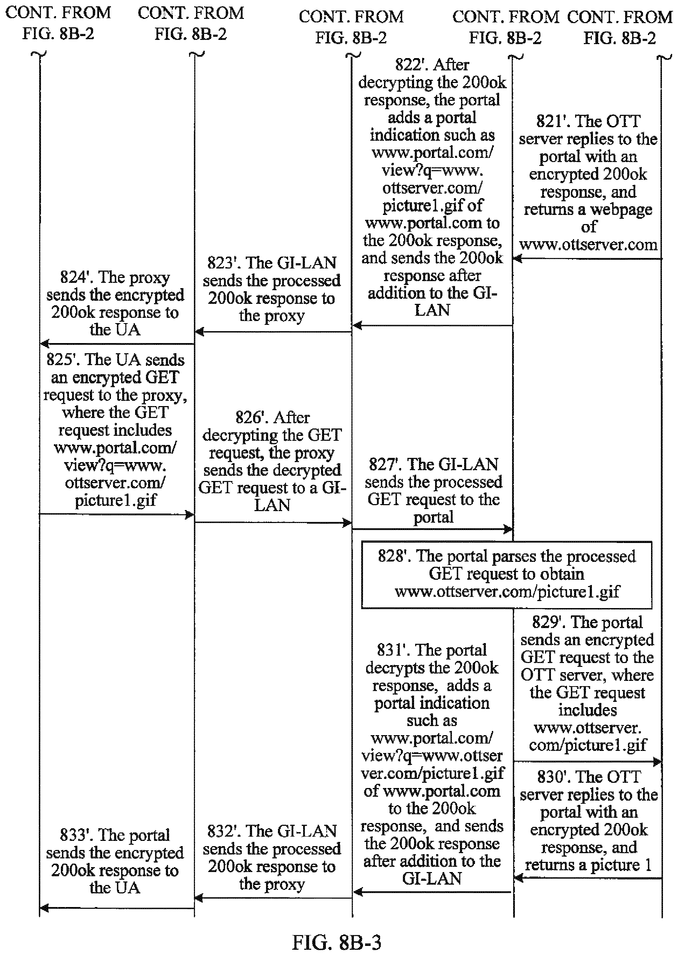

FIG. 8B-1, FIG. 8B-2 and FIG. 8B-3 are an application flowchart of a sixth service processing method according to an embodiment of the present invention;

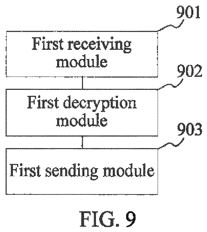

FIG. 9 is a schematic structural diagram of a service processing apparatus according to an embodiment of the present invention;

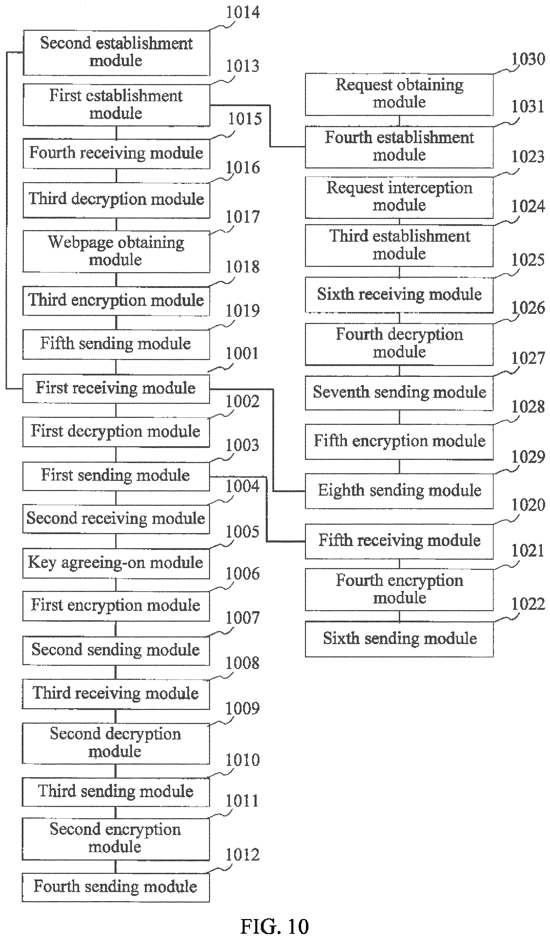

FIG. 10 is a schematic structural diagram of another service processing apparatus according to an embodiment of the present invention; and

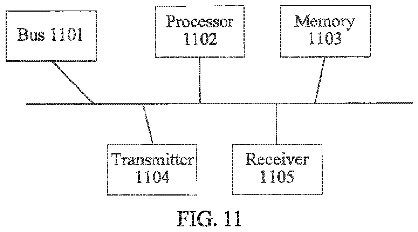

FIG. 11 is a schematic structural diagram of a service processing apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

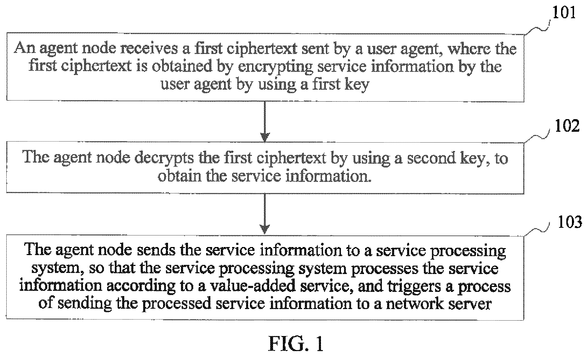

Referring to FIG. 1, FIG. 1 is a method flowchart of a service processing method according to an embodiment of the present invention. The service processing method may include the following steps:
Step 101: An agent node receives a first ciphertext sent by a user agent, where the first ciphertext is obtained by encrypting service information by the user agent by using a first key.
Step 102: The agent node decrypts the first ciphertext by using a second key, to obtain the service information.
Step 103: The agent node sends the service information to a service processing system, so that the service processing system processes the service information according to a value-added service, and triggers a process of sending the processed service information to a network server.

The first key and the second key are keys agreed on between the user agent and the agent node when the user agent and the agent node establish an encrypted connection.

To sum up, according to the service processing method provided in this embodiment of the present invention, a first ciphertext sent by a user agent is received; the first ciphertext is decrypted by using a second key, to obtain the service information; and the service information is sent to a service processing system, so that the service processing system processes the service information according to a value-added service, and triggers a process of sending the processed service information to a network server. When the user agent uses the SSL/TLS protocol, an agent node may decrypt the transmitted first ciphertext, and send the service information obtained through decryption to the service processing system, so as to resolve the problem that the service processing system cannot decrypt a ciphertext, and consequently the service processing system cannot provide a value-added service to the user agent using the SSL/TLS protocol, and expand a use range of the value-added service.

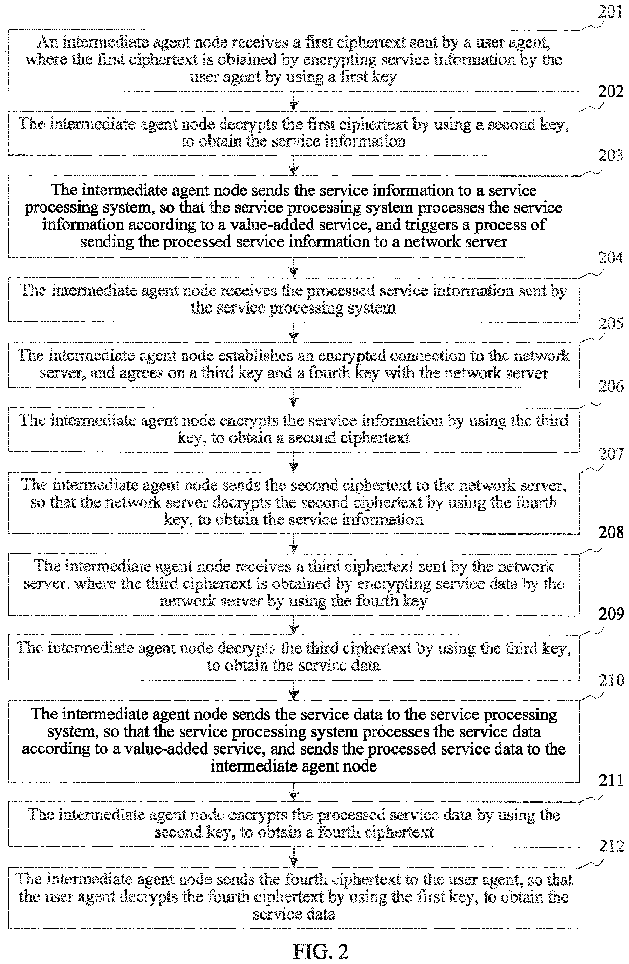

Referring to FIG. 2, FIG. 1 is a method flowchart of another service processing method according to an embodiment of the present invention. In this embodiment, description is performed by using an example in which an agent node is an intermediate agent node, a user agent and the intermediate agent node establish an encrypted connection, and the intermediate agent node and a network server establish an encrypted connection. The service processing method may include the following steps:
Step 201: An intermediate agent node receives a first ciphertext sent by a user agent, where the first ciphertext is obtained by encrypting service information by the user agent by using a first key.

In this embodiment, the intermediate agent node may be a portal. Certainly, the intermediate agent node may further be another site. This is not limited in this embodiment.

The service information is used to perform service interaction with a network server, and may be specifically used to request a service from the network server, or may be specifically used to send service data to the network server. When the service information is used to request a service from the network server, the service information may be used to request a home page of the network server, or may be used to request an object (object) in the network server. The object may be an object stored in the network server, or may be an object stored in another server and a uniform resource identifier (English: uniform resource identifier; URI for short) of the object is included in a web page of the network server.

For example, when the network server is an OTT server and the service information is used to request a home page of the OTT server from the OTT server, the service information includes www.ottserver.com in this case; and when a web page of the OTT server includes a URI and the service information is used to request an object indicated by the URI from the OTT server, assuming that the URI included in the web page is www.ottserver.com/picture1.gif and a user needs to obtain and access a picture 1 indicated by the URI, the service information includes www.ottserver.com/picture1.gif in this case.

Optionally, the service information may be obtained by adding an agent indication by the intermediate agent node to the foregoing URL. The agent indication is used to indicate an intermediate agent node of a relay service, and may be a URL of the intermediate agent node. For example, when the intermediate agent node is a portal, the agent indication may be a URL www.portal.com of the intermediate agent node.

If the agent indication is added, when the service information is used to request the home page provided by the network server, indication information is web page indication information, that is, a URL of the network server, and in this case the service information may be www.portal.com/view?q=www.ottserver.com; or when the service information is used to request an object in the network server, indication information is object indication information, that is, a URI of the object, and in this case the service information may be www.portal.com/view?q=www.ottserver.com/picture1.gif.

Optionally, the intermediate agent node may further convert the web page indication information or the object indication information, and add the agent indication to information obtained through conversion, to obtain the service information. By means of conversion, a plaintext may be converted into a ciphertext to be transmitted, thereby improving data transmission security. For example, www.ottserver.com may be replaced with www.abcd1234, and in this case www.portal.com/view?q=www.abcd1234 is www portal.com/view?q=www.ottserver.com.

Before the intermediate agent node receives the first ciphertext sent by the user agent, the intermediate agent node needs to establish an encrypted connection to the user agent, and agree on a key with the user agent during establishment of the encrypted connection.

When an encryption key and a decryption key of a same device are the same, a first key and a second key may be agreed on, the first key is stored in the user agent, and the user agent may encrypt, by using the first key, a plaintext to be sent to the intermediate agent node, and may also decrypt, by using the first key, a ciphertext sent by the intermediate agent node; and the second key is stored in the intermediate agent node, and the intermediate agent node may encrypt, by using the second key, a plaintext to be sent to the user agent, and may also decrypt, by using the second key, a ciphertext sent by the user agent. When an encryption key and a decryption key of a same device are different, a first key and a second key may be agreed on, a fifth key and a sixth key are agreed on, the first key and the fifth key are stored in the user agent, and the user agent may encrypt, by using the first key, a plaintext to be sent to the intermediate agent node, and may decrypt, by using the fifth key, a ciphertext sent by the intermediate agent node; and the second key and the sixth key are stored in the intermediate agent node, and the intermediate agent node may encrypt, by using the second key, a plaintext to be sent to the user agent, and may decrypt, by using the sixth key, a ciphertext sent by the user agent. The first key and the second key may be symmetrical keys, or may be asymmetrical keys; the fifth key and the sixth key may be symmetrical keys, or may be asymmetrical keys. Description is performed below by using an example in which an encryption key and a decryption key of a same device are the same.

An encrypted connection may be a connection based on the SSL/TLS protocol. Because a process of establishing an encrypted connection based on the SSL protocol is similar to that of establishing an encrypted connection based on the TLS protocol, description is performed below by using the encrypted connection based on the TLS protocol as an example.

This embodiment provides two establishment manners of an encrypted connection between the intermediate agent node and the user agent, and the two establishment manners are specifically as follows:
In a first establishment manner, the intermediate agent node intercepts a first access request sent by the user agent to the network server, instructs the user agent to send a first connection establishment request, and establishes the encrypted connection to the user agent according to the first connection establishment request sent by the user agent, where the first access request is used to request to access the network server.

The first access request may specifically request to access a home page of the network server or an object in the network server.

The intermediate agent node establishes a transmission control protocol (English: transmission control protocol; TCP for short) connection to the user agent. Ports of the TCP connection include a port 80 and a port 443, and if the user agent needs to access the network server based on the HTTP protocol, the port of the TCP connection is the port 80; or if the user agent needs to access the network server based on the hyper text transfer protocol over secure socket layer (English: hyper text transfer protocol over secure socket layer; for short: HTTP S) in which the SSL/TLS protocol is used at a lower layer, the port of the TCP connection is the port 443. The establishment manner of the encrypted connection between the intermediate agent node and the user agent is described below separately by using an example in which the ports of the TCP connection are the port 80 and the port 443.

First, when the port of the TCP connection established between the intermediate agent node and the user agent is the port 80, the instructing the user agent to send a first connection establishment request including: instructing the user agent to send the first connection establishment request by using a redirection response.

The redirection response may be an HTTP Redirection. Optionally, a location header field of the redirection response may include type information, and the type information is used to instruct the user agent to request a type of an established connection. For example, when the redirection response needs to instruct the user agent to establish an encrypted connection, HTTPS may be carried in the type information, and HTTPS is used to indicate the HTTPS protocol; or when the redirection response needs to instruct the user agent to establish an unencrypted connection, HTTP may be carried in the type information, and HTTP is used to indicate the HTTP protocol. In this embodiment, description is performed by using an example in which the type information carries HTTPS; in this case, the first connection establishment request is used to request to establish an encrypted connection, and a port of the encrypted connection is the port 443.

It should be noted that, the intermediate agent node may directly send the redirection response to the user agent; or the intermediate agent node may send the first access request to the service processing system, and after receiving the first access request processed by the service processing system, send the processed first access request to the user agent; or the intermediate agent node may detect whether the first access request needs to be sent to the service processing system for processing; when detecting that the first access request does not need to be sent to the service processing system for processing, send the redirection response to the user agent, or when detecting that the first access request does needs to be sent to the service processing system for processing, send the first access request to the service processing system; and after receiving the first access request processed by the service processing system, send the processed first access request to the user agent.

Second, when the port of the TCP connection established between the intermediate agent node and the user agent is the port 443, the method provided in this embodiment further includes:
1) the intermediate agent node intercepts a TCP connection request sent by the user agent to the network server; and
2) the intermediate agent node reads information in the TCP connection request, replaces the network server according to the information to establish a TCP connection to the user agent, and after establishment of the TCP connection is completed, establishes an encrypted agent connection to the user agent by using a pre-stored digital certificate corresponding to the network server, where the encrypted agent connection is used by the user agent to send the first access request to the network server.

The information in the TCP connection request includes a source end Internet Protocol (English: Internet Protocol; IP for short) address, a source end port, a destination end IP address, and a destination end port, a source end is the user agent, and a destination end is the network server. The intermediate agent node replaces the network server by using the foregoing information, establishes a TCP connection whose port is the port 443 to the user agent, and after establishment of the TCP connection is completed, then establishes an encrypted agent connection to the user agent by using a pre-stored digital certificate corresponding to the network server, where the encrypted agent connection refers to an encrypted connection established between the intermediate agent node replacing the network server and the user agent.

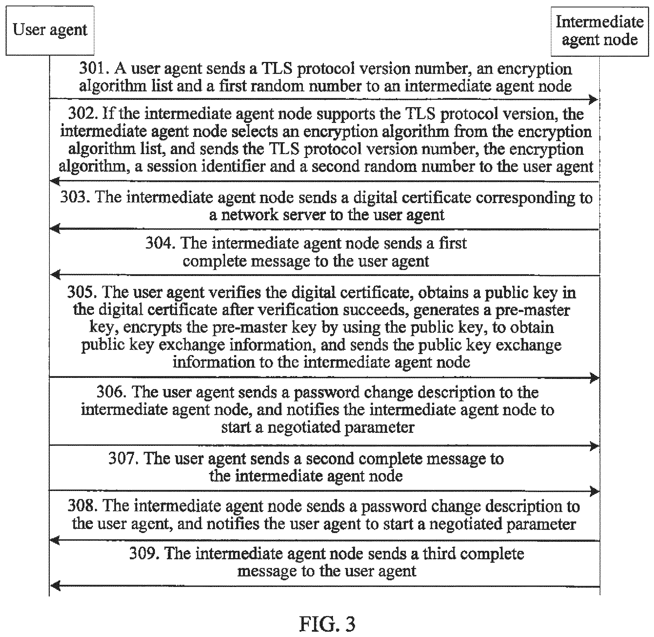

Referring to FIG. 3, FIG. 3 is a schematic diagram of establishing a TLS connection according to an embodiment of the present invention, and shows a process of establishing a TLS connection between a user agent and an intermediate agent node.

Step 301: The user agent sends the TLS protocol version, an encryption algorithm list and a first random number to the intermediate agent node.

Step 302: If the intermediate agent node supports the TLS protocol version, the intermediate agent node selects an encryption algorithm from the encryption algorithm list, and sends the TLS protocol version, the encryption algorithm, a session identifier and a second random number to the user agent.

Step 303: The intermediate agent node sends a digital certificate corresponding to a network server to the user agent.

Step 304: The intermediate agent node sends a first complete message to the user agent.

Step 305: The user agent verifies the digital certificate, obtains a public key in the digital certificate after verification succeeds, generates a pre-master key, encrypts the pre-master key by using the public key, to obtain public key exchange information, and sends the public key exchange information to the intermediate agent node.

Step 306: The user agent sends a password change description to the intermediate agent node, and notifies the intermediate agent node to start a negotiated parameter.

In this case, the user agent generates a first key according to the first random number, the second random number, the pre-master key and the encryption algorithm.

Step 307: The user agent sends a second complete message to the intermediate agent node.

Step 308: The intermediate agent node sends a password change description to the user agent, and notifies the user agent to start a negotiated parameter.

In this case, the intermediate agent node decrypts the public key exchange information by using a private key, to obtain the pre-master key, and generates a second key according to the first random number, the second random number, the pre-master key and the encryption algorithm.

Step 309: The intermediate agent node sends a third complete message to the user agent.

In this embodiment, the intermediate agent node may agree on an encryption key and a decryption key with the user agent in a process of establishing an encrypted agent connection to the user agent. In this case, the intermediate agent node may encrypt a redirection response by using the encryption key, and send a ciphertext obtained through encryption to the user agent, and the user agent decrypts the ciphertext by using the decryption key, to obtain the redirection response. The user agent generates a first connection establishment request according to the redirection response, and sends the first connection establishment request to the intermediate agent node, and the intermediate agent node obtains the first connection establishment request.

It should be noted that, before establishing the encrypted agent connection to the user agent, the intermediate agent node further needs to obtain the digital certificate corresponding to the network server, and the private key, the digital certificate includes at least the public key, an owner name and a digital signature of a certificate issuer, and the digital signature refers to a Hash value obtained by performing a Hash operation on information, and is used to verify whether the information is tampered. The digital signature in this embodiment is used to verify whether the digital certificate is tampered.

Therefore, the establishing an encrypted agent connection to the user agent by using a pre-stored digital certificate corresponding to the network server includes:
1) sending, by the intermediate agent node, a first digital certificate to the user agent, where the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or
2) sending, by the intermediate agent node, a third digital certificate and a fourth digital certificate to the user agent, where the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds.

The digital certificate corresponding to the network server may be an authentic digital certificate of the network server, or may be another digital certificate except an authentic digital certificate, and a correspondence exists between the another digital certificate and the network server. In this embodiment, the another digital certificate may be an agent digital certificate, or may be a counterfeit digital certificate, and specific content is described as follows.

In a first implementation manner, the certificate issuer may be an authorized certificate issuer, or may be an unauthorized certificate issuer.

When the certificate issuer is an authorized certificate issuer, the authorized certificate issuer issues an agent digital certificate of the network server to a trusted intermediate agent node according to a need such as security monitoring, and the agent digital certificate is the first digital certificate. The authorized certificate issuer may issue different agent digital certificates to each network server, or may issue a same agent digital certificate to multiple different network servers, and this not limited in this embodiment.

Alternatively, the agent digital certificate of the network server may be a sub-certificate on a digital certificate link of the network server. The sub-certificate may be issued by the network server, or may be issued by another third-party authorized certificate issuer.

In this embodiment, the agent digital certificate may be the same as the authentic digital certificate issued by the authorized certificate issuer to the network server, or may be different from the authentic digital certificate. That is, the agent digital certificate and the authentic digital certificate may possess different pairs of public keys and private keys.

When the certificate issuer is an unauthorized certificate issuer, the unauthorized certificate issuer issues the digital certificate corresponding to the network server to the intermediate agent node. In this case, the digital certificate is a counterfeit digital certificate, and the counterfeit digital certificate is the first digital certificate.

When verifying a digital certificate, the user agent detects whether a root certificate of a certificate issuer of the digital certificate is in a trusted certificate authority (English: Certificate Authority; CA for short) list, and the root certificate is the second digital certificate. If the root certificate is in the trusted CA list, a digital signature in the digital certificate is verified according to a public key of the root certificate, and if verification on the digital signature succeeds, verification on the digital certificate succeeds; or if verification on the digital signature fails, verification on the digital certificate fails; or if the root certificate is not in the trusted CA list, verification on the digital certificate fails.

Optionally, the digital certificate corresponding to the network server obtained by the intermediate agent node may be issued by a multilevel certificate issuer. For example, the digital certificate corresponding to the network server obtained by the intermediate agent node is issued by an intermediate-level certificate issuer Issuer, and a digital certificate of the intermediate-level certificate issuer Issuer is issued by a high-level certificate issuer Root CA. In this case, the user agent searches for digital certificates of the certificate issuer level by level, and detects whether the root certificate of the certificate issuer of the digital certificates is in the trusted CA list. If the root certificate is in the trusted CA list, a digital signature in a low-level digital certificate is verified according to the public key of the root certificate, and if verification on the digital signature succeeds, a digital signature in a lower-level digital certificate is verified according to a public key of the low-level digital certificate. After verification on all digital signatures succeeds, verification on the digital certificates succeeds. If verification on one of the digital signatures fails, verification on the digital certificate fails; or if the root certificate is not in the trusted CA list, verification on the digital certificate fails.

It should be noted that, when the certificate issuer is an authorized certificate issuer, a root certificate of the authorized certificate issuer is preconfigured in the user agent or an operating system of a terminal in which the user agent is installed, that is, the root certificate of the authorized certificate issuer is preconfigured in the trusted CA list; or when the certificate issuer is an unauthorized certificate issuer, a root certificate of the unauthorized certificate issuer further needs to be added to the trusted CA list.

In an addition manner, negotiation with an operating system manufacturer or a user agent manufacturer may be performed, and the root certificate of the unauthorized certificate issuer is added to the trusted CA list. In a second addition manner, a user may be prompted to install the root certificate of the unauthorized certificate issuer, and the root certificate of the unauthorized certificate issuer is added to the trusted CA list.

In a second implementation manner, the intermediate agent node may obtain a digital certificate link sent by an unauthorized certificate issuer, the digital certificate link includes at least a digital certificate of the unauthorized certificate issuer, that is, a self-signed root certificate, that is, the fourth digital certificate, and a counterfeit digital certificate of the network server, the intermediate agent node sends the digital certificate link to the user agent, and the counterfeit digital certificate is the third digital certificate.

When verifying the digital certificate, the user agent reads a public key of a root certificate of the received digital certificate link, and verifies a digital signature in the counterfeit digital certificate according to the public key, and if verification on the digital signature succeeds, verification on the counterfeit digital certificate succeeds; or if verification on the digital signature fails, verification on the counterfeit digital certificate fails.

Optionally, the counterfeit digital certificate obtained by the intermediate agent node may be issued by a multilevel unauthorized certificate issuer, that is, the certificate link further includes a digital certificate of the multilevel unauthorized certificate issuer. For example, the digital certificate corresponding to the network server obtained by the intermediate agent node is issued by an unauthorized intermediate-level certificate issuer Issuer, and a digital certificate of the unauthorized intermediate-level certificate issuer Issuer is issued by an unauthorized high-level certificate issuer Root CA. In this case, the user agent searches for a root certificate of an unauthorized certificate issuer from received digital certificates level by level, and verifies a digital signature in a low-level digital certificate according to a public key of the root certificate. If verification on the digital signature succeeds, a digital signature in a lower-level digital certificate is verified according to a public key of the low-level digital certificate. After verification on all digital signatures succeeds, verification on the digital certificates succeeds; or if verification on one of the digital signatures fails, verification on the digital certificate fails.

In a second establishment manner, the intermediate agent node receives a first connection establishment request sent by the user agent, and establishes the encrypted connection to the user agent according to the first connection establishment request sent by the user agent, where the first connection establishment request is sent by the user agent after the user agent receives a trigger signal triggered by a user, and the trigger signal is generated after the user triggers a web page of the intermediate agent node that is pre-stored in the user agent.

The web page of the intermediate agent node may be used as a home page, a bookmark, or configuration information and stored in the user agent, or an application program, a service or the like customized for the intermediate agent node is installed in the user agent, and a user may directly obtain the web page from the user agent and trigger the web page. Manners in which the user triggers the web page include at least one of the following manners: if the web page of the intermediate agent node includes an input box, when the user enters a URL of the network server or information into the input box, triggering the web page, where the information may be an IP address or a domain name; or if the web page of the intermediate agent node includes a hyperlink, when the user clicks the hyperlink, triggering the web page.

A process in which the intermediate agent node establishes a TLS connection to the user agent is similar to the process shown in FIG. 3, and a difference is: in step 303, the intermediate agent node sends the digital certificate of the intermediate agent node to the user agent.

In this embodiment, the redirection response includes a URL of the intermediate agent node, or the redirection response includes an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

The redirection response needs to include the URL of the intermediate agent node, so that the user agent accesses the network server by using the intermediate agent node. In a first implementation manner, the redirection response may include only the URL www.portal.com of the intermediate agent node. In a second implementation manner, the redirection response not only includes the URL of the intermediate agent node, but also includes the web page indication information or the object indication information of the network server or information obtained by converting one of the foregoing two pieces of information, and the web page indication information and the object indication information may be obtained from the first access request. For example, when the web page indication information is the URL www.ottserver.com of the network server, the redirection response may include www.portal.com/view?q=www.ottserver.com; and when the object indication information is www.ottserver.com/picture1.gif, the redirection response may include www.portal.com/view?q=www.ottserver.com/picture1.gif.

Optionally, when the redirection response includes the URL of the intermediate agent node, after the establishing, by the intermediate agent node, the encrypted connection to the user agent according to the first connection establishment request sent by the user agent, the method further includes:
1) receiving, by the intermediate agent node, a fifth ciphertext sent by the user agent, where the fifth ciphertext is obtained by encrypting a second access request by the user agent by using the first key, and the second access request is used to request to access the intermediate agent node;
2) decrypting, by the intermediate agent node, the fifth ciphertext by using the second key, to obtain the second access request;
3) obtaining, by the intermediate agent node, the web page of the intermediate agent node;
4) encrypting, by the intermediate agent node, the web page by using the second key, to obtain a sixth ciphertext; and
5) sending, by the intermediate agent node, the sixth ciphertext to the user agent, so that the user agent decrypts the sixth ciphertext by using the first key, to obtain the web page, and the web page is used to trigger the user agent to send the first ciphertext.

The second access request may specifically request to access a home page of the intermediate agent node or an object in the intermediate agent node.

If the redirection response includes only the URL of the intermediate agent node, the user agent further needs to obtain the web page of the intermediate agent node according to the URL of the intermediate agent node, so that after receiving the web page, the user triggers the web page, and the user agent sends the first connection establishment request according to the triggering, and after establishing an encrypted connection to the intermediate agent node, sends the first ciphertext.

It should be noted that, the intermediate agent node may directly obtain the web page of the intermediate agent node; or the intermediate agent node may send the second access request to the service processing system, and after receiving the second access request processed by the service processing system, obtain the web page of the intermediate agent node; or the intermediate agent node may detect whether the second access request needs to be sent to the service processing system for processing; when detecting that the second access request does not need to be sent to the service processing system for processing, obtain the web page of the intermediate agent node, or when detecting that the second access request does needs to be sent to the service processing system for processing, send the second access request to the service processing system; and after receiving the second access request processed by the service processing system, obtain the web page of the intermediate agent node.

When detecting whether the second access request needs to be sent to the service processing system for processing, the intermediate agent node may detect whether the URL included in the second access request is the URL of the intermediate agent node, and if detecting that the URL included in the second access request is the URL of the intermediate agent node, determine that the second access request does not need to be sent to the service processing system for processing, or if detecting that the URL included in the second access request is not the URL of the intermediate agent node, determine that the second access request needs to be sent to the service processing system for processing. Certainly, the intermediate agent node may further detect, by using another method, whether the second access request needs to be sent to the service processing system for processing, and this not limited in this embodiment.

Step 202: The intermediate agent node decrypts the first ciphertext by using a second key, to obtain the service information.

The intermediate agent node determines the second key corresponding to the first key, and then decrypts the first ciphertext by using the second key, to obtain the service information.

Step 203: The intermediate agent node sends the service information to a service processing system, so that the service processing system processes the service information according to a value-added service, and triggers a process of sending the processed service information to a network server.

In this embodiment, after receiving the service information, the service processing system may determine a user agent according to the service information, then determine a value-added service customized by the user agent, and process the service information according to the value-added service. Specifically, the service processing system may determine a service link for implementing the value-added service, and send the service information to service processing units in the service link, the service processing units in the service link sequentially process the service information, and then the processed service information is sent to the network server.

It should be noted that, when the redirection response includes information obtained by converting web page indication information or object indication information, service information received in this case includes the information, and the intermediate agent node may convert the information into the corresponding web page indication information or object indication information, and then send the information obtained through conversion to the service processing system.

Step 204: The intermediate agent node receives the processed service information sent by the service processing system.

Step 205: The intermediate agent node establishes an encrypted connection to the network server, and agrees on a third key and a fourth key with the network server.

When the service information includes web page indication information or information obtained by converting web page indication information, the intermediate agent node parses the processed service information to obtain a URL of the network server, establishes an encrypted connection to the network server indicated by the URL, and agrees on the third key and the fourth key. A process in which the intermediate agent node establishes an encrypted connection to the network server is similar to a process in which the intermediate agent node establishes an encrypted connection to the user agent, and details are not described herein.

When the service information includes object indication information or information obtained by converting object indication information, in a first implementation manner, when the intermediate agent node already obtains a web page of the network server, that is, the intermediate agent node already establishes an encrypted connection to the network server, step 205 may be not performed in this case, and step 206 is directly performed; and in a second implementation manner, when the intermediate agent node has not obtained the home page of the network server, the intermediate agent node parses the processed service information to obtain a URL of the network server, establishes an encrypted connection to the network server indicated by the URL, and agrees on the third key and the fourth key, and details are not described herein.

Step 206: The intermediate agent node encrypts the service information by using the third key, to obtain a second ciphertext.

The service information in this step may be service information obtained by removing the URL of the intermediate agent node. That is, the service information in this case includes only network server indication information, or the service information includes only the object indication information.

Step 207: The intermediate agent node sends the second ciphertext to the network server, so that the network server decrypts the second ciphertext by using the fourth key, to obtain the service information.

Step 208: The intermediate agent node receives a third ciphertext sent by the network server, where the third ciphertext is obtained by encrypting service data by the network server by using the fourth key.

The network server obtains the corresponding service data according to the service information, encrypts the service data by using the fourth key, to obtain the third ciphertext, and sends the third ciphertext to the intermediate agent node. For example, when the service information includes www.ottserver.com, the service data may be the home page of the network server; or when the service information includes www.ottserver.com/picture1.gif, the service data may be a picture 1.

Step 209: The intermediate agent node decrypts the third ciphertext by using the third key, to obtain the service data.

Step 210: The intermediate agent node sends the service data to the service processing system, so that the service processing system processes the service data according to a value-added service, and sends the processed service data to the intermediate agent node.

For example, when the service data is the picture 1, after receiving the picture 1, the service processing system may convert an original resolution 640*480 of the picture 1 to 320*240, and then send the picture 1 obtained through conversion to the intermediate agent node.

Step 211: The intermediate agent node encrypts the processed service data by using the second key, to obtain a fourth ciphertext.

When the service data is a web page of the network server, the web page may further include object indication information, and in this case the intermediate agent node further needs to add an agent indication to the object indication information. For example, when the web page includes a URI of the picture 1, the intermediate agent node may add the URL www.portal.com of the intermediate agent node to www.ottserver.com/picture1.gif, to obtain www.portal.com/view?q=www.ottserver.com/picture1.gif.

Step 212: The intermediate agent node sends the fourth ciphertext to the user agent, so that the user agent decrypts the fourth ciphertext by using the first key, to obtain the service data.

To sum up, according to the service processing method provided in this embodiment of the present invention, a first ciphertext sent by a user agent is received; the first ciphertext is decrypted by using a second key, to obtain the service information; and the service information is sent to a service processing system, so that the service processing system processes the service information according to a value-added service, and triggers a process of sending the processed service information to a network server. When the user agent uses the SSL/TLS protocol, an agent node may decrypt the transmitted first ciphertext, and send the service information obtained through decryption to the service processing system, so as to resolve the problem that the service processing system cannot decrypt a ciphertext, and consequently the service processing system cannot provide a value-added service to the user agent using the SSL/TLS protocol, and expand a use range of the value-added service.

Additionally, a redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information. The web page indication information, the object indication information or the information obtained by converting one of the foregoing two pieces of information may be directly sent to the user agent, and it does not need to first obtain a web page of the intermediate agent node, and then trigger the web page of the intermediate agent node to obtain the web page indication information, the object indication information or the information obtained by converting one of the foregoing two pieces of information, and therefore an operation process may be simplified, thereby improving service processing efficiency.

A process of a service processing method is described below by using an example in which an agent node is an intermediate agent node, a user agent and the intermediate agent node establish an encrypted connection, and the intermediate agent node and a network server establish an encrypted connection. Referring to an application flowchart of a first service processing method shown in FIG. 4A-1, FIG. 4A-2 and FIG. 4A-3, in FIG. 4A-1, FIG. 4A-2 and FIG. 4A-3, an example in which an intermediate agent node is a portal, a user agent is a UA, a network server is an OTT server, a service processing system is a GI-LAN, all requests involved in FIG. 4A-1, FIG. 4A-2 and FIG. 4A-3 are HTTP requests and the HTTP requests are GET requests is used.

Step 401: The UA establishes a TCP connection (port 80) between the UA and the portal.

When the intermediate agent node instructs the user agent to send a first connection establishment request, step 402 is performed; or when a user triggers the user agent to send a first connection establishment request, step 404 is performed.

Step 402: The portal intercepts a GET request sent by the UA to the OTT server, where the GET request includes www.ottserver.com. The GET request is a first access request.

Step 403: The portal sends, to the UA, a redirection response and/or type information that needs to be accessed by using the HTTPS protocol. The HTTPS protocol is the HTTP protocol in which the SSL/TLS protocol is used at a lower layer.

When the redirection response includes www.portal.com, step 404 is performed; or when the redirection response includes www.portal.com/view?q=www.ottserver.com, step 409 is performed.

Step 404: If the portal needs to be accessed by using the HTTPS protocol, the UA re-establishes a TCP connection (port 443) between the UA and the portal.

Step 405: The UA performs a TLS handshake process between the UA and the portal.

Step 406: The UA sends an encrypted GET request to the portal, where the GET request includes www.portal.com. The GET request is a second access request.

Step 407: The portal decrypts the GET request and then sends the GET request to the GI-LAN, and the GI-LAN processes the GET request and then returns the processed GET request to the portal.

Step 408: The portal replies to the UA with an encrypted 200ok response, and returns a web page of www.portal.com.

Step 409: The UA sends an encrypted GET request to the portal, where the GET request includes www.portal.com/view?q=www.ottserver.com.

Step 410: The portal decrypts the GET request and then sends the GET request to the GI-LAN, and the GI-LAN processes the GET request and then returns the processed GET request to the portal.

Step 411: The portal parses the processed GET request to obtain www.ottserver.com.

Step 412: The portal establishes a TCP connection (port 443) between the portal and the OTT server.

Step 413: The portal performs a TLS handshake process between the portal and the OTT server.

Step 414: The portal sends an encrypted GET request to the OTT server, where the GET request includes www.ottserver.com.

Step 415: The OTT server replies to the portal with an encrypted 200ok response, and returns a web page of www.ottserver.com.

Step 416: The portal decrypts the 200ok response and then sends the 200ok response to the GI-LAN, and the GI-LAN processes the 200ok response and then returns the processed 200ok response to the portal.

Step 417: The portal adds a portal indication such as www.portal.com/view?q=www.ottserver.com/picture1.gif of www.portal.com to the processed 200ok response.

Step 418: The portal sends the encrypted 200ok response to the UA.

Step 419: The UA sends an encrypted GET request to the portal, where the GET request includes www.portal.com/view?q=www.ottserver.com/picture1.gif.

Step 420: The portal decrypts the GET request and then sends the GET request to the GI-LAN, and the GI-LAN processes the GET request and then returns the processed GET request to the portal.

Step 421: The portal parses the processed GET request to obtain www.ottserver.com/picture1.gif.

Step 422: The portal sends an encrypted GET request to the OTT server, where the GET request includes www.ottserver.com/picture1.gif.

Step 423: The OTT server replies to the portal with an encrypted 200ok response, and returns a picture 1.

Step 424: The portal decrypts the 200ok response and then sends the 200ok response to the GI-LAN, and the GI-LAN processes the 200ok response and then returns the processed 200ok response to the portal.

Step 425: The portal adds a portal indication of www.portal.com to the processed 200ok response.

Step 426: The portal sends an encrypted 200ok response to the UA.

Referring to an application flowchart of a second service processing method shown in FIG. 4B-1, FIG. 4B-2 and FIG. 4B-3, in FIG. 4B-1, FIG. 4B-2 and FIG. 4B-3, an intermediate agent node is a portal, a user agent is a UA, a network server is an OTT server, and a service processing system is a GI-LAN.

Step 401': The portal intercepts a TCP connection request sent by the UA to the OTT server, and replaces the OTT server according to information in the TCP connection request to establish a TCP connection between the portal and the UA (port 443).

Step 402': The portal performs a TLS handshake process between the portal and the UA by using a digital certificate corresponding to the OTT server.

Step 403': The portal intercepts an encrypted GET request sent by the UA to the OTT server, where the GET request includes www.ottserver.com. The GET request is a first access request.

Step 404': The portal sends, to the UA, an encrypted redirection response and/or encrypted type information that needs to be accessed by using the HTTPS protocol. The HTTPS protocol is the HTTP protocol in which the SSL/TLS protocol is used at a lower layer.

Step 405': The UA establishes a TCP connection (port 443) between the UA and the portal, and after establishment of the TCP connection is completed, the UA performs a TLS handshake process between the UA and the portal. In this case, the portal uses a digital certificate of the portal.

When the redirection response includes www.portal.com, step 406' is performed; or when the redirection response includes www.portal.com/view?q=www.ottserver.com, step 409' is performed.

Content of step 406' to step 427' is the same as content of step 405 to step 426, and details are not described herein.

Referring to FIG. 5, FIG. 1 is a method flowchart of another service processing method according to an embodiment of the present invention. In this embodiment, description is performed by using an example in which an agent node is an intermediate agent node, a user agent and the intermediate agent node establish an unencrypted connection, and the intermediate agent node and a network server establish an encrypted connection. The service processing method may include the following steps:
Step 501: The intermediate agent node receives service information sent by the user agent.

In this embodiment, the intermediate agent node may be a portal. Certainly, the intermediate agent node may further be another site. This is not limited in this embodiment. Refer to description about the service information in step 201, and details are not described herein.

This embodiment provides two manners of triggering the agent node to send the service information, and the two manners are specifically as follows:
In a first triggering manner, the intermediate agent node intercepts a first access request sent by the user agent to the network server, and instructs the user agent to send a second access request, and the intermediate agent node obtains a web page of the intermediate agent node according to the second access request, and sends the web page to the user agent, where the web page is used to trigger the user agent to send the service information, the first access request is used to request to access the network server, the second access request is used to request to access the intermediate agent node, and a redirection response includes a URL of the intermediate agent node.

It should be noted that, the intermediate agent node may directly obtain the web page of the intermediate agent node; or the intermediate agent node may send the second access request to the service processing system, and after receiving the second access request processed by the service processing system, obtain the web page of the intermediate agent node; or the intermediate agent node may detect whether the second access request needs to be sent to the service processing system for processing; when detecting that the second access request does not need to be sent to the service processing system for processing, obtain the web page of the intermediate agent node, or when detecting that the second access request does needs to be sent to the service processing system for processing, send the second access request to the service processing system; and after receiving the second access request processed by the service processing system, obtain the web page of the intermediate agent node. For details of a process in which the intermediate agent node detects whether the second access request needs to be sent to the service processing system for processing, refer to description in step 201, and the details are not described herein.

In a second triggering manner, the intermediate agent node intercepts a first access request sent by the user agent to the network server, and instructs the user agent to send the service information, where the first access request is used to request to access the network server, a redirection response includes an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

In this embodiment, a port of a TCP connection established between the intermediate agent node and the user agent is a port 80 or a port 443. When the port of the TCP connection established between the intermediate agent node and the user agent is the port 443, the method provided in this embodiment further includes: the intermediate agent node intercepts a TCP connection request sent by the user agent to the network server; and the intermediate agent node reads information in the TCP connection request, replaces the network server according to the information to establish a TCP connection to the user agent, and after establishment of the TCP connection is completed, establishes an encrypted agent connection to the user agent by using a pre-stored digital certificate corresponding to the network server; and the intermediate agent node instructs, by using the encrypted agent connection, the user agent to send the second access request. For details of a process in which the intermediate agent node establishes an encrypted agent connection to the user agent, refer to description in step 201, and the details are not described herein.

Optionally, the establishing an encrypted agent connection to the user agent by using a pre-stored digital certificate corresponding to the network server includes: sending, by the intermediate agent node, a first digital certificate to the user agent, where the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or sending, by the intermediate agent node, a third digital certificate and a fourth digital certificate to the user agent, where the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds. For details of a process in which the intermediate agent node establishes an encrypted agent connection to the user agent according to a digital certificate corresponding to the network server, refer to description in step 201, and the details are not described herein.

The intermediate agent node may instruct, by using the redirection response, the user agent to send the second access request or the service information. Optionally, a location header field of the redirection response may include type information, and the type information is used to instruct the user agent to request a type of an established connection. In this embodiment, description is performed by using an example in which the type information carries HTTP, and in this case the user agent does not need to re-establish an encrypted connection to the intermediate agent node.

Optionally, the web page of the intermediate agent node may be used as a home page, a bookmark, or configuration information and stored in the user agent, or an application program, a service or the like customized for the intermediate agent node is installed in the user agent, a user may directly obtain the web page from the user agent and trigger the web page, and in this case, the user agent sends the service information to the intermediate agent node. Manners in which the user triggers the web page include at least one of the following manners: if the web page of the intermediate agent node includes an input box, when the user enters a URL of the network server or information into the input box, triggering the web page, where the information may be an IP address or a domain name; or if the web page of the intermediate agent node includes a hyperlink, when the user clicks the hyperlink, triggering the web page.

Step 502: The intermediate agent node sends the service information to a service processing system, so that the service processing system processes the service information according to a value-added service, and triggers a process of sending the processed service information to a network server.

In this embodiment, after receiving the service information, the service processing system may determine a user agent according to the service information, then determine a value-added service customized by the user agent, and process the service information according to the value-added service. Specifically, the service processing system may determine a service link for implementing the value-added service, and send the service information to service processing units in the service link, the service processing units in the service link sequentially process the service information, and then the processed service information is sent to the network server.

Step 503: The intermediate agent node receives the processed service information sent by the service processing system.

After the intermediate agent node receives the service information, the intermediate agent node needs to establish a network connection to the network server, so as to transmit the service information. The intermediate agent node may establish an encrypted connection to the network server, and in this case, step 504 is performed; or the intermediate agent node may establish an unencrypted connection to the network server, and in this case the intermediate agent node directly sends the service information to the network server, receives the service data sent by the network server, and then performs step 509.

Step 504: The intermediate agent node establishes an encrypted connection to the network server, and agrees on a third key and a fourth key with the network server.

When the service information includes web page indication information or information obtained by converting web page indication information, the intermediate agent node parses the processed service information to obtain a URL of the network server, establishes an encrypted connection to the network server indicated by the URL, and agrees on the third key and the fourth key.

When the service information includes object indication information or information obtained by converting object indication information, in a first implementation manner, when the intermediate agent node already obtains a web page of the network server, that is, the intermediate agent node already establishes an encrypted connection to the network server, step 504 may be not performed in this case, and step 505 is directly performed; and in a second implementation manner, when the intermediate agent node has not obtained the home page of the network server, the intermediate agent node parses the processed service information to obtain a URL of the network server, establishes an encrypted connection to the network server indicated by the URL, and agrees on the third key and the fourth key, and details are not described herein.

Step 505: The intermediate agent node encrypts the service information by using the third key, to obtain a second ciphertext.

The service information in this step may be service information obtained by removing the URL of the intermediate agent node. That is, the service information in this case includes only network server indication information, or the service information includes only the object indication information.

Step 506: The intermediate agent node sends the second ciphertext to the network server, so that the network server decrypts the second ciphertext by using the fourth key, to obtain the service information.

Step 507: The intermediate agent node receives a third ciphertext sent by the network server, where the third ciphertext is obtained by encrypting service data by the network server by using the fourth key.

The network server obtains the corresponding service data according to the service information, encrypts the service data by using the fourth key, to obtain the third ciphertext, and sends the third ciphertext to the intermediate agent node. For example, when the service information includes www.ottserver.com, the service data may be the home page of the network server; or when the service information includes www.ottserver.com/picture1.gif, the service data may be a picture 1.

Step 508: The intermediate agent node decrypts the third ciphertext by using the third key, to obtain the service data.

Step 509: The intermediate agent node sends the service data to the service processing system, so that the service processing system processes the service data according to a value-added service, and sends the processed service data to the intermediate agent node.

For example, when the service data is the picture 1, after receiving the picture 1, the service processing system may convert an original resolution 640*480 of the picture 1 to 320*240, and then send the picture 1 obtained through conversion to the intermediate agent node.

Step 510: The intermediate agent node sends the processed service data to the user agent.

When the service data is a web page of the network server, the web page may further include object indication information, and in this case the intermediate agent node further needs to add an agent indication to the object indication information. For example, when the web page includes a URI of the picture 1, the intermediate agent node may add the URL of the intermediate agent node to www.ottserver.com/picture1.gif, to obtain www.portal.com/view?q=www.ottserver.com/picture1.gif.

To sum up, according to the service processing method provided in this embodiment of the present invention, a redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information. The web page indication information, the object indication information or the information obtained by converting one of the foregoing two pieces of information may be directly sent to the user agent, and it does not need to first obtain a web page of the intermediate agent node, and then trigger the web page of the intermediate agent node to obtain the web page indication information, the object indication information or the information obtained by converting one of the foregoing two pieces of information, and therefore an operation process may be simplified, thereby improving service processing efficiency.

A process of a service processing method is described below by using an example in which an agent node is an intermediate agent node, a user agent and the intermediate agent node establish an unencrypted connection, and the intermediate agent node and a network server establish an encrypted connection. Referring to an application flowchart of a third service processing method shown in FIG. 6A-1, FIG. 6A-2 and FIG. 6A-3, in FIG. 6A-1, FIG. 6A-2 and FIG. 6A-3, an example in which an intermediate agent node is a portal, a user agent is a UA, a network server is an OTT server, a service processing system is a GI-LAN, all requests involved in FIG. 6A-1, FIG. 6A-2 and FIG. 6A-3 are HTTP requests and the HTTP requests are GET requests is used.

Step 601: The UA establishes a TCP connection (port 80) between the UA and the portal.

Step 602: The portal intercepts a GET request sent by the UA to the OTT server, where the GET request includes www.ottserver.com. The GET request is a first access request.

Step 603: The portal sends, to the UA., a redirection response and/or type information that needs to be accessed by using the HTTPS protocol. The HTTPS protocol is the HTTP protocol in which the SSL/TLS protocol is used at a lower layer.

When the redirection response includes www.portal.com, step 604 is performed; or when the redirection response includes www.portal.com/view?q=www.ottserver.com, step 607 is performed.

Step 604: The UA sends a GET request to the portal, where the GET request includes www.portal.com. The GET request is a second access request.

Step 605: The portal sends the GET request to the GI-LAN, and the GI-LAN processes the GET request and then returns the processed GET request to the portal.

Step 606: The portal replies to the UA with a 200ok response, and returns a web page of www.portal.com.

Step 607: The UA sends a GET request to the portal, where the GET request includes www.portal.com/view?q=www.ottserver.com.

Step 608: The portal sends the GET request to the GI-LAN, and the GI-LAN processes the GET request and then returns the processed GET request to the portal.

Step 609: The portal parses the processed GET request to obtain www.ottserver.com.

Step 610: The portal establishes a TCP connection (port 443) between the portal and the OTT server.

Step 611: The portal performs a TLS handshake process between the portal and the OTT server.

Step 612: The portal sends an encrypted GET request to the OTT server, where the GET request includes www.ottserver.com.

Step 613: The OTT server replies to the portal with an encrypted 200ok response, and returns a web page of www.ottserver.com.

Step 614: The portal decrypts the 200ok response and then sends the 200ok response to the GI-LAN, and the GI-LAN processes the 200ok response and then returns the processed 200ok response to the portal.

Step 615: The portal adds a portal indication such as www.portal.com/view?q=www.ottserver.com/picture1.gif of www.portal.com to the processed 200ok response.

Step 616: The portal sends a 200ok response to the UA.

Step 617: The UA sends a GET request to the portal, where the GET request includes www.portal.com/view?q=www.ottserver.com/picture1.gif.

Step 618: The portal sends the GET request to the GI-LAN, and the GI-LAN processes the GET request and then returns the processed GET request to the portal.

Step 619: The portal parses the processed GET request to obtain www.ottserver.com/picture1.gif.

Step 620: The portal sends an encrypted GET request to the OTT server, where the GET request includes www.ottserver.com/picture1.gif.

Step 621: The OTT server replies to the portal with an encrypted 200ok response, and returns a picture 1.

Step 622: The portal decrypts the 200ok response and then sends the 200ok response to the GI-LAN, and the GI-LAN processes the 200ok response and then returns the processed 200ok response to the portal.

Step 623: The portal adds a portal indication of www.portal.com to the processed 200ok response.

Step 624: The portal sends a 200ok response to the UA.

Referring to an application flowchart of a fourth service processing method shown in FIG. 6B-1, FIG. 6B-2 and FIG. 6B-3, in FIG. 6B-1, FIG. 6B-2 and FIG. 6B-3, an intermediate agent node is a portal, a user agent is a UA, a network server is an OTT server, and a service processing system is a GI-LAN.

Step 601': The portal intercepts a TCP connection request sent by the UA to the OTT server, and replaces the OTT server according to information in the TCP connection request to establish a TCP connection between the portal and the UA (port 443).

Step 602': The portal performs a TLS handshake process between the portal and the UA by using a digital certificate corresponding to the OTT server.

Step 603': The portal intercepts an encrypted GET request sent by the UA to the OTT server, where the GET request includes www.ottserver.com. The GET request is a first access request.

Step 604': The portal sends, to the UA, an encrypted redirection response and/or encrypted type information that needs to be accessed by using the HTTPS protocol. The HTTPS protocol is the HTTP protocol in which the SSL/TLS protocol is used at a lower layer.

Step 605': The UA establishes a TCP connection (port 80) between the UA and the portal.

When the redirection response includes www.portal.com, step 606' is performed; or when the redirection response includes www.portal.com/view?q=www.ottserver.com, step 609' is performed.

Content of step 606' to step 626' is the same as content of step 604 to step 624, and details are not described herein.

Referring to FIG. 7, FIG. 1 is a method flowchart of another service processing method according to an embodiment of the present invention. In this embodiment, description is performed by using an example in which an agent node is a front-end agent node located between a user agent and an intermediate agent node, and the service processing method may include the following steps:
Step 701: The front-end agent node receives a first ciphertext sent by the user agent, where the first ciphertext is obtained by encrypting service information by the user agent by using a first key.

The front-end agent node is the agent node located between the user agent and the intermediate agent node. Specifically, the front-end agent node may be located between the user agent and a service processing system, and the service processing system is located between the front-end agent node and the intermediate agent node. In this embodiment, the intermediate agent node may be a portal. Certainly, the intermediate agent node may further be another site. This is not limited in this embodiment.

Refer to description about the service information and the first key in step 201, and details are not described herein.

An encrypted connection may be a connection based on the SSL/TLS protocol. Because a process of establishing an encrypted connection based on the SSL protocol is similar to that of establishing an encrypted connection based on the TLS protocol, description is performed below by using the encrypted connection based on the TLS protocol as an example.

Specifically, before the receiving, by an agent node, a first ciphertext sent by a user agent, the method further includes:
1) intercepting, by the front-end agent node, a second connection establishment request sent by the user agent to the intermediate agent node, where the second connection establishment request includes a destination IP address of the intermediate agent node; and
2) establishing, by the front-end agent node, the encrypted connection to the user agent according to the destination IP address and pre-stored node information of the intermediate agent node.

In a first establishment manner, when the intermediate agent node instructs the user agent to send the second connection establishment request, and before the user agent sends the second connection establishment request to the intermediate agent node, the user agent needs to establish a TCP connection whose port is a port 80 or a port 443 to the intermediate agent node. For details of an establishment process, refer to description in step 201, and the details are not described herein.

Optionally, after the intermediate agent node intercepts a first access request sent by the user agent to the network server, the intermediate agent node instructs the user agent to send the second connection establishment request, where the first access request is used to request to access the network server, or the second connection establishment request is sent by the user agent after the user agent receives a trigger signal triggered by a user, and the trigger signal is generated after the user triggers a web page of the intermediate agent node that is pre-stored in the user agent.

After the user agent establishes the TCP connection to the intermediate agent node, the intermediate agent node intercepts the first access request sent by the user agent to the network server, and instructs the user agent to send the second connection establishment request, and then the front-end agent node intercepts the second connection establishment request sent by the user agent to the intermediate agent node.

The second connection establishment request needs to carry a destination IP address of a destination of the second connection establishment request, and therefore, the second connection establishment request includes the destination IP address of the intermediate agent node, and the front-end agent node may obtain the destination IP address from the second connection establishment request, and then establish an encrypted connection to the user agent by using the destination IP address and pre-stored node information of the intermediate agent node. In this case, the front-end agent node establishes the encrypted connection to the user agent by using information about the intermediate agent node, and therefore, the user agent cannot sense existence of the front-end agent node.

It should be noted that, when the port of the TCP connection established between the intermediate agent node and the user agent is the port 443, after the intermediate agent node intercepts, by using an encrypted agent connection, the first access request sent by the user agent to the network server, the intermediate agent node instructs the user agent to send the second connection establishment request, and the encrypted agent connection is established with the user agent by using a pre-stored digital certificate corresponding to the network server after the intermediate agent node intercepts a TCP connection request sent by the user agent to the network server, reads information in the TCP connection request, and replaces, according to the information, the network server to establish a TCP connection to the user agent, and after establishment of the TCP connection is completed. For details of a process in which the intermediate agent node establishes an encrypted agent connection to the user agent and a process in which the intermediate agent node establishes an encrypted agent connection to the user agent according to a digital certificate corresponding to the network server, refer to description in step 201, and the details are not described herein.

In a second establishment manner, when a user triggers the user agent to send the second connection establishment request, the web page of the intermediate agent node may be used as a home page, a bookmark, or configuration information and stored in the user agent, or an application program, a service or the like customized for the intermediate agent node is installed in the user agent, and a user may directly obtain the web page from the user agent and trigger the web page. If the web page of the intermediate agent node includes an input box, when the user enters a URL of the network server or information into the input box, triggering the web page, where the information may be an IP address or a domain name; or if the web page of the intermediate agent node includes a hyperlink, when the user clicks the hyperlink, triggering the web page.

Specifically, the establishing, by the front-end agent node, the encrypted connection to the user agent according to the destination IP address and pre-stored node information of the intermediate agent node includes:
1) if the node information includes a digital certificate and a private key, sending, by the front-end agent node, the digital certificate to the user agent, receiving encrypted information that is sent by the user agent according to a public key carried in the digital certificate, decrypting the encrypted information by using the private key to obtain a pre-master key, and establishing the encrypted connection to the user agent by using the destination IP address; or
2) if the node information includes a digital certificate, sending, by the front-end agent node, the digital certificate to the user agent, receiving encrypted information that is sent by the user agent according to a public key carried in the digital certificate, sending the encrypted information to the intermediate agent node, receiving a pre-master key that is sent after the intermediate agent node decrypts the encrypted information by using a private key, and establishing the encrypted connection to the user agent by using the destination IP address, where
the pre-master key is used to generate the first key and the second key.

In a first implementation manner, the node information includes at least a digital certificate and a private key. For details of a specific establishment process, refer to the process shown in FIG. 3. The TLS protocol version, the encryption algorithm and the second random number in step 303 are generated by the front-end agent node. The digital certificate in step 304 is the digital certificate of the intermediate agent node. In step 309, the front-end agent node decrypts public key exchange information by using the private key of the intermediate agent node, to generate the second key.

In a second implementation manner, the node information includes at least a digital certificate. For details of a specific establishment process, refer to the process shown in FIG. 3. The TLS protocol version, the encryption algorithm and the second random number in step 303 are generated by the front-end agent node. The digital certificate in step 304 is the digital certificate of the intermediate agent node. In step 309, the front-end agent node sends the public key exchange information to the intermediate agent node, the intermediate agent node decrypts the public key exchange information by using the private key, to obtain the pre-master key, and sends the pre-master key to the front-end agent node, and the front-end agent node generates the second key according to the first random number, the second random number, the pre-master key and the encryption algorithm.

The front-end agent node may obtain a digital certificate and a key from a third party or the intermediate agent node, and an obtaining manner is not limited in this embodiment.

In this embodiment, when the intermediate agent node instructs, by using a redirection response, the user agent to send the second connection establishment request after the intermediate agent node intercepts the first access request, the redirection response includes a URL of the intermediate agent node; or a redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information.

A location header field of the redirection response may include type information, and the type information is used to instruct the user agent to request a type of an established connection. In this embodiment, description is performed by using an example in which the type information carries HTTPS; in this case, the second connection establishment request is used to request to establish an encrypted connection, and a port of the encrypted connection is the port 443.

Optionally, when the redirection response includes the URL of the intermediate agent node, after the establishing, by the front-end agent node, the encrypted connection to the user agent according to the destination IP address and pre-stored node information of the intermediate agent node, the method further includes:
1) receiving, by the front-end agent node, a fifth ciphertext sent by the user agent, where the fifth ciphertext is obtained by encrypting a second access request by the user agent by using the first key, and the second access request is used to request to access the intermediate agent node;
2) decrypting, by the front-end agent node, the fifth ciphertext by using the second key, to obtain the second access request;
3) sending, by the front-end agent node, the second access request to the service processing system, so that the service processing system processes the second access request according to a value-added service, and sends the processed second access request to the intermediate agent node;
4) encrypting, by the front-end agent node by using the second key, a web page sent by the service processing system, to obtain a sixth ciphertext, where the web page is sent by the intermediate agent node to the service processing system; and
5) sending, by the front-end agent node, the sixth ciphertext to the user agent, so that the user agent decrypts the sixth ciphertext by using the first key, to obtain the web page, and the web page is used to trigger the user agent to send the first ciphertext.

If the redirection response includes only the URL of the intermediate agent node, the user agent further needs to obtain the web page of the intermediate agent node according to the URL of the intermediate agent node, so that after receiving the web page, the user triggers the web page, and the user agent sends the second connection establishment request according to the triggering, and after establishing an encrypted connection to the front-end agent node, sends the first ciphertext.

It should be noted that, the front-end agent node may directly send the second access request to the service processing system for processing; or the front-end agent node may detect whether the second access request needs to be sent to the service processing system for processing, and when detecting that the second access request does not need to be sent to the service processing system for processing, send the second access request to the intermediate agent node, or when detecting that the second access request needs to be sent to the service processing system for processing, send the second access request to the service processing system.

When detecting whether the second access request needs to be sent to the service processing system for processing, the front-end agent node may detect whether the URL included in the second access request is the URL of the intermediate agent node, and if detecting that the URL included in the second access request is the URL of the intermediate agent node, determine that the second access request does not need to be sent to the service processing system for processing, or if detecting that the URL included in the second access request is not the URL of the intermediate agent node, determine that the second access request needs to be sent to the service processing system for processing. Certainly, the front-end agent node may further detect, by using another method, whether the second access request needs to be sent to the service processing system for processing, and this not limited in this embodiment.

Further, the service processing system may send the processed second access request to the intermediate agent node, the intermediate agent node obtains a web page of the intermediate agent node, and sends the web page to the service processing system, and then the service processing system processes the web page of the intermediate agent node according to a value-added service, and sends the processed web page to the front-end agent node. A process in which the service processing system processes the second access request and the web page of the intermediate agent node is similar to a process in which the service processing system processes the service information in step 203, and details are not described herein.

Step 702: The front-end agent node decrypts the first ciphertext by using a second key, to obtain the service information.

The front-end agent node determines the second key corresponding to the first key, and then decrypts the first ciphertext by using the second key, to obtain the service information.

Step 703: The front-end agent node sends the service information to a service processing system, so that the service processing system processes the service information according to a value-added service, and triggers a process of sending the processed service information to a network server.

In this embodiment, after receiving the service information, the service processing system may determine a user agent according to the service information, then determine a value-added service customized by the user agent, and process the service information according to the value-added service. Specifically, the service processing system may determine a service link for implementing the value-added service, and send the service information to service processing units in the service link, the service processing units in the service link sequentially process the service information, and then the processed service information is sent to the intermediate agent node.

When the service information includes web page indication information or information obtained by converting web page indication information, the intermediate agent node parses the processed service information to obtain a URL of the network server, establishes an encrypted connection to the network server indicated by the URL, agrees on the third key and the fourth key, encrypts the service information by using the third key, and then sends the encrypted service information to the network server. A process in which the intermediate agent node establishes an encrypted connection to the network server is similar to a process in which the intermediate agent node establishes an encrypted connection to the user agent, and details are not described herein.

When the service information includes object indication information or information obtained by converting object indication information, in a first implementation manner, when the intermediate agent node already obtains a web page of the network server, that is, the intermediate agent node already establishes an encrypted connection to the network server, and in this case the intermediate agent node may directly encrypt the service information by using the third key, and send an obtained second ciphertext to the network server; and in a second implementation manner, when the intermediate agent node has not obtained the home page of the network server, the intermediate agent node parses the processed service information to obtain a URL of the network server, establishes an encrypted connection to the network server indicated by the URL, and agrees on the third key and the fourth key, and details are not described herein.

It should be noted that, the service information encrypted by the intermediate agent node may be service information obtained by removing the URL of the intermediate agent node. That is, the service information in this case includes only network server indication information, or the service information includes only the object indication information.

Step 704: The front-end agent node receives service data sent by the service processing system.

The network server decrypts the second ciphertext by using the fourth key, to obtain the service information, obtains the corresponding service data according to the service information, encrypts the service data by using the fourth key, to obtain the third ciphertext, and sends the third ciphertext to the intermediate agent node. For example, when the service information includes www.ottserver.com, the service data may be the home page of the network server; or when the service information includes www.ottserver.com/picture1.gif, the service data may be a picture 1.

The intermediate agent node decrypts the third ciphertext by using the third key, to obtain the service data, and sends the service data to the service processing system for processing, and then the service processing system sends the processed service data to the front-end agent node. For example, when the service data is the picture 1, after receiving the picture 1, the service processing system may convert an original resolution 640*480 of the picture 1 to 320*240, and then send the picture 1 obtained through conversion to the intermediate agent node.

When the service data is a web page of the network server, the web page may further include object indication information, and in this case the intermediate agent node further needs to add an agent indication to the object indication information. For example, when the web page includes a URI of the picture 1, the intermediate agent node may add the URL of the intermediate agent node to www.ottserver.com/picture1.gif, to obtain www.portal.com/view?q=www.ottserver.com/picture1.gif.

Step 705: The front-end agent node encrypts the service data by using the second key, to obtain a seventh ciphertext.

Step 706: The front-end agent node sends the seventh ciphertext to the user agent, so that the user agent decrypts the seventh ciphertext by using the first key, to obtain the service data.

To sum up, according to the service processing method provided in this embodiment of the present invention, a first ciphertext sent by a user agent is received; the first ciphertext is decrypted by using a second key, to obtain the service information; and the service information is sent to a service processing system, so that the service processing system processes the service information according to a value-added service, and triggers a process of sending the processed service information to a network server. When the user agent uses the SSL/TLS protocol, an agent node may decrypt the transmitted first ciphertext, and send the service information obtained through decryption to the service processing system, so as to resolve the problem that the service processing system cannot decrypt a ciphertext, and consequently the service processing system cannot provide a value-added service to the user agent using the SSL/TLS protocol, and expand a use range of the value-added service.

Additionally, a redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information. The web page indication information, the object indication information or the information obtained by converting one of the foregoing two pieces of information may be directly sent to the user agent, and it does not need to first obtain a web page of the intermediate agent node, and then trigger the web page of the intermediate agent node to obtain the web page indication information, the object indication information or the information obtained by converting one of the foregoing two pieces of information, and therefore an operation process may be simplified, thereby improving service processing efficiency.

A process of a service processing method is described below by using an example in which an agent node is a front-end agent node, a user agent and the front-end agent node establish an encrypted connection, and an intermediate agent node and a network server establish an encrypted connection. Referring to an application flowchart of a fifth service processing method shown in FIG. 8A-1, FIG. 8A-2 and FIG. 8A-3, in FIG. 8A-1, FIG. 8A-2 and FIG. 8A-3, an example in which an intermediate agent node is a portal, a user agent is a UA, a front-end agent node is a proxy, a network server is an OTT server, a service processing system is a GI-LAN, all requests involved in FIG. 8A-1, FIG. 8A-2 and FIG. 8A-3 are HTTP requests and the HTTP requests are GET requests is used.

Step 801: The UA establishes a TCP connection (port 80) between the UA and the portal.

When the intermediate agent node instructs the user agent to send a second connection establishment request, step 802 is performed; or when a user triggers the user agent to send a second connection establishment request, step 804 is performed.

Step 802: The portal intercepts a GET request sent by the UA to the OTT server, where the GET request includes www.ottserver.com. The GET request is a first access request.

Step 803: The portal sends, to the UA, a redirection response and/or type information that needs to be accessed by using the HTTPS protocol. The HTTPS protocol is the HTTP protocol in which the SSL/TLS protocol is used at a lower layer.

Step 804: If the portal needs to be accessed by using the HTTPS protocol, the proxy intercepts the TCP connection between the UA and the portal, and establishes a TCP connection (port 443) to the UA by using a destination IP address of the portal.

Step 805: The proxy establishes a TCP connection (port 80) between the proxy and the portal.

Step 806: The UA performs a TLS handshake process between the UA and the proxy.

When the proxy obtains a digital certificate and a private key of the portal in advance, the proxy decrypts public key exchange information according to the private key to obtain a pre-master key; or when the proxy obtains a digital certificate of the portal in advance, but does not obtain a private key, step 806 further includes step 806'. Step 806' is: the proxy sends public key exchange information to the portal, and after decrypting the public key exchange information by using the private key, the portal sends a pre-master key to the proxy.

When the redirection response includes www.portal.com, step 807 is performed; or when the redirection response includes www.portal.com/view?q=www.ottserver.com, step 813 is performed.

Step 807: The UA sends an encrypted GET request to the proxy, where the GET request includes www.portal.com. The GET request is a second access request.

Step 808: After decrypting the GET request, the proxy sends the decrypted GET request to the GI-LAN.

Step 809: The GI-LAN sends the processed GET request to the portal.

Step 810: The portal replies to the GI-LAN with an encrypted 200ok response, and returns a web page of www.portal.com.

Step 811: The GI-LAN replies to the proxy with the encrypted 200ok response, and returns the web page of www.portal.com.

Step 812: The proxy replies to the UA with the encrypted 200ok response, and returns the web page of www.portal.com.

Step 813: The UA sends an encrypted GET request to the proxy, where the GET request includes www.porkal.com/view?q=www.ottserver.com.

Step 814: After decrypting the GET request, the proxy sends the decrypted GET request to the GI-LAN.

Step 815: The GI-LAN sends the processed GET request to the portal.

Step 816: The portal parses the processed GET request to obtain www.ottserver.com.

Step 817: The portal establishes a TCP connection (port 443) between the portal and the OTT server.

Step 818: The portal performs a TLS handshake process between the portal and the OTT server.

Step 819: The portal sends an encrypted GET request to the OTT server, where the GET request includes www.ottserver.com.

Step 820: The OTT server replies to the portal with an encrypted 200ok response, and returns a web page of www.ottserver.com.

Step 821: After decrypting the 200ok response, the portal adds a portal indication such as www.portal.com/view?q=www.ottserver.com/picture1.gif of www.portal.com to the 200ok response, and sends the 200ok response after addition to the GI-LAN.

Step 822: The GI-LAN sends the processed 200ok response to the proxy.

Step 823: The proxy sends the encrypted 200ok response to the UA.

Step 824: The UA sends an encrypted GET request to the proxy, where the GET request includes www.portal.com/view?q=www.ottserver.com/picture1.gif.

Step 825: After decrypting the GET request, the proxy sends the decrypted GET request to the GI-LAN.

Step 826: The GI-LAN sends the processed GET request to the portal.

Step 827: The portal parses the processed GET request to obtain www.ottserver.com/picture1.gif.

Step 828: The portal sends an encrypted GET request to the OTT server, where the GET request includes www.ottserver.com/picture1.gif.

Step 829: The OTT server replies to the portal with an encrypted 200ok response, and returns a picture 1.

Step 830: The portal decrypts the 200ok response, adds a portal indication such as www.portal.com/view?q=www.ottserver.com/picture1.gif of www.portal.com to the 200ok response, and sends the 200ok response after addition to the GI-LAN.

Step 831: The GI-LAN sends the processed 200ok response to the proxy.

Step 832: The portal sends the encrypted 200ok response to the UA.

Referring to an application flowchart of a sixth service processing method shown in FIG. 8B-1, FIG. 8B-2 and FIG. 8B-3, in FIG. 8B-1, FIG. 8B-2 and FIG. 8B-3, an intermediate agent node is a portal, a user agent is a UA, a front-end agent node is a proxy, a network server is an OTT server, and a service processing system is a GI-LAN.

Step 801': The portal intercepts a TCP connection request sent by the UA to the OTT server, and replaces the OTT server according to information in the TCP connection request to establish a TCP connection between the portal and the UA (port 443).

Step 802': The portal performs a TLS handshake process between the portal and the UA by using a digital certificate corresponding to the OTT server.

Step 803': The portal intercepts a GET request sent by the UA to the OTT server, where the GET request includes www.ottserver.com. The GET request is a first access request.

Step 804': The portal sends, to the UA, an encrypted redirection response and/or encrypted type information that needs to be accessed by using the HTTPS protocol. The HTTPS protocol is the HTTP protocol in which the SSL/TLS protocol is used at a lower layer.

Content of step 805' to step 833' is the same as content of step 804 to step 832, and details are not described herein.

Referring to FIG. 9, FIG. 9 is a schematic structural diagram of a service processing apparatus according to an embodiment of the present invention. The service processing apparatus may include:
a first receiving module 901, configured to receive a first ciphertext sent by a user agent, where the first ciphertext is obtained by encrypting service information by the user agent by using a first key;
a first decryption module 902, configured to decrypt, by using a second key, the first ciphertext received by the first receiving module 901, to obtain the service information; and
a first sending module 903, configured to send the service information obtained through decryption of the first decryption module 902 to a service processing system, so that the service processing system processes the service information according to a value-added service, and triggers a process of sending the processed service information to a network server, where
the first key and the second key are keys agreed on between the user agent and the agent node when the user agent and the agent node establish an encrypted connection.

To sum up, according to the service processing apparatus provided in this embodiment of the present invention, a first ciphertext sent by a user agent is received; the first ciphertext is decrypted by using a second key, to obtain the service information; and the service information is sent to a service processing system, so that the service processing system processes the service information according to a value-added service, and triggers a process of sending the processed service information to a network server. When the user agent uses the SSL/TLS protocol, an agent node may decrypt the transmitted first ciphertext, and send the service information obtained through decryption to the service processing system, so as to resolve the problem that the service processing system cannot decrypt a ciphertext, and consequently the service processing system cannot provide a value-added service to the user agent using the SSL/TLS protocol, and expand a use range of the value-added service.

Referring to FIG. 10, FIG. 10 is a schematic structural diagram of another service processing apparatus according to an embodiment of the present invention. The service processing apparatus may include:
a first receiving module 1001, configured to receive a first ciphertext sent by a user agent, where the first ciphertext is obtained by encrypting service information by the user agent by using a first key;
a first decryption module 1002, configured to decrypt, by using a second key, the first ciphertext received by the first receiving module 1001, to obtain the service information; and
a first sending module 1003, configured to send the service information obtained through decryption of the first decryption module 1002 to a service processing system, so that the service processing system processes the service information according to a value-added service, and triggers a process of sending the processed service information to a network server, where
the first key and the second key are keys agreed on between the user agent and the agent node when the user agent and the agent node establish an encrypted connection.

In a first application scenario, the agent node is an intermediate agent node.

Optionally, the apparatus further includes:
a second receiving module 1004, configured to: after the first sending module 1003 sends the service information to the service processing system, receive the processed service information sent by the service processing system;
a key agreeing-on module 1005, configured to establish an encrypted connection to the network server, and agree on a third key and a fourth key with the network server;
a first encryption module 1006, configured to encrypt the service information by using the third key that is agreed on by the key agreeing-on module 1005, to obtain a second ciphertext; and
a second sending module 1007, configured to send the second ciphertext obtained through encryption of the first encryption module 1006 to the network server, so that the network server decrypts the second ciphertext by using the fourth key, to obtain the service information.

Optionally, the apparatus further includes:
a third receiving module 1008, configured to: after the second sending module 1007 sends the second ciphertext to the network server, receive a third ciphertext sent by the network server, where the third ciphertext is obtained by encrypting service data by the network server by using the fourth key;
a second decryption module 1009, configured to decrypt, by using the third key, the third ciphertext received by the third receiving module 1008, to obtain the service data;
a third sending module 1010, configured to send the service data obtained through decryption of the second decryption module 1009 to the service processing system, so that the service processing system processes the service data according to a value-added service, and sends the processed service data to the intermediate agent node;
a second encryption module 1011, configured to encrypt the processed service data by using the second key, to obtain a fourth ciphertext; and
a fourth sending module 1012, configured to send the fourth ciphertext obtained through encryption of the second encryption module 1011 to the user agent, so that the user agent decrypts the fourth ciphertext by using the first key, to obtain the service data.

Optionally, the apparatus further includes:
a first establishment module 1013, configured to: before the first receiving module 1001 receives the first ciphertext sent by the user agent, intercept a first access request sent by the user agent to the network server, instruct the user agent to send a first connection establishment request, and establish the encrypted connection to the user agent according to the first connection establishment request sent by the user agent, where the first access request is used to request to access the network server; or
a second establishment module 1014, configured to: before the first receiving module 1001 receives the first ciphertext sent by the user agent, receive a first connection establishment request sent by the user agent, and establish the encrypted connection to the user agent according to the first connection establishment request sent by the user agent, where the first connection establishment request is sent by the user agent after the user agent receives a trigger signal triggered by a user, and the trigger signal is generated after the user triggers a web page of the intermediate agent node that is pre-stored in the user agent.

Optionally, the apparatus further includes:
a request obtaining module 1030, configured to: before the first establishment module 1013 intercepts the first access request sent by the user agent to the network server, intercept a TCP connection request sent by the user agent to the network server; and
a fourth establishment module 1031, configured to read information about the network server in the TCP connection request, replace the network server according to the information to establish a TCP connection to the user agent, and after establishment of the TCP connection is completed, establish an encrypted agent connection to the user agent by using a pre-stored digital certificate corresponding to the network server, where the encrypted agent connection is used by the user agent to send the first access request to the network server.

Optionally, the fourth establishment module 1031 is specifically configured to:
send a first digital certificate to the user agent, where the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or
send a third digital certificate and a fourth digital certificate to the user agent, where the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds.

Optionally, the first establishment module 1013 is specifically configured to instruct, by using a redirection response, the user agent to send the first connection establishment request.

Optionally, the redirection response includes a URL of the intermediate agent node; or
the redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information.

Optionally, when the redirection response includes the URL of the intermediate agent node, the apparatus further includes:
a fourth receiving module 1015, configured to: after the first establishment module 1013 establishes the encrypted connection to the user agent according to the first connection establishment request sent by the user agent, receive a fifth ciphertext sent by the user agent, where the fifth ciphertext is obtained by encrypting a second access request by the user agent by using the first key, and the second access request is used to request to access the intermediate agent node;
a third decryption module 1016, configured to decrypt, by using the second key, the fifth ciphertext received by the fifth receiving module 1015, to obtain the second access request;
a web page obtaining module 1017, configured to obtain the web page of the intermediate agent node;
a third encryption module 1018, configured to encrypt, by using the second key, the web page obtained by the web page obtaining module 1016, to obtain a sixth ciphertext; and
a fifth sending module 1019, configured to send the sixth ciphertext obtained through encryption of the third encryption module 1018 to the user agent, so that the user agent decrypts the sixth ciphertext by using the first key, to obtain the web page, and the web page is used to trigger the user agent to send the first ciphertext.

In a second application scenario, the agent node is the front-end agent node located between the user agent and the intermediate agent node.

Optionally, the apparatus further includes:
a fifth receiving module 1020, configured to: after the first sending module 1003 sends the service information to the service processing system, receive service data sent by the service processing system;
a fourth encryption module 1021, configured to encrypt, by using the second key, the service data received by the fifth receiving module 1020, to obtain a seventh ciphertext; and
a sixth sending module 1022, configured to send the seventh ciphertext obtained through encryption of the fourth encryption module 1021 to the user agent, so that the user agent decrypts the seventh ciphertext by using the first key, to obtain the service data.

Optionally, the apparatus further includes:
a request interception module 1023, configured to: before the first receiving module 1001 receives the first ciphertext sent by the user agent, intercept a second connection establishment request sent by the user agent to the intermediate agent node, where the second connection establishment request includes a destination IP address of the intermediate agent node; and
a third establishment module 1024, configured to establish the encrypted connection to the user agent according to the destination IP address and pre-stored node information of the intermediate agent node.

Optionally, after the intermediate agent node intercepts a first access request sent by the user agent to the network server, the intermediate agent node instructs the user agent to send the second connection establishment request, where the first access request is used to request to access the network server, or the second connection establishment request is sent by the user agent after the user agent receives a trigger signal triggered by a user, and the trigger signal is generated after the user triggers a web page of the intermediate agent node that is pre-stored in the user agent.

Optionally, after intercepting, by using the encrypted agent connection, the first access request sent by the user agent to the network server, the intermediate agent node instructs the user agent to send the second connection establishment request, and the encrypted agent connection is established to the user agent by using the pre-stored digital certificate corresponding to the network server after the intermediate agent node intercepts the TCP connection request sent by the user agent to the network server, reads information about the network server in the TCP connection request, and replaces the network server according to the information to establish the TCP connection to the user agent, and after establishment of the TCP connection is completed.

Optionally, when the intermediate agent node instructs, by using a redirection response, the user agent to send the second connection establishment request after the intermediate agent node intercepts the first access request,
the redirection response includes a URL of the intermediate agent node; or
the redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information.

Optionally, the redirection response includes the URL of the intermediate agent node, and the apparatus further includes:
a sixth receiving module 1025, configured to: after the third establishment module 1024 establishes the encrypted connection to the user agent according to the destination IP address and the pre-stored node information of the intermediate agent node, receive a fifth ciphertext sent by the user agent, where the fifth ciphertext is obtained by encrypting a second access request by the user agent by using the first key, and the second access request is used to request to access the intermediate agent node;
a fourth decryption module 1026, configured to decrypt, by using the second key, the fifth ciphertext received by the sixth receiving module 1025, to obtain the second access request;
a seventh sending module 1027, configured to send the second access request obtained through decryption of the fourth decryption module 1026 to the service processing system, so that the service processing system processes the second access request according to a value-added service, and sends the processed second access request to the intermediate agent node;
a fifth encryption module 1028, configured to encrypt, by using the second key, a web page sent by the service processing system, to obtain a sixth ciphertext, where the web page is sent by the intermediate agent node to the service processing system; and
an eighth sending module 1029, configured to send the sixth ciphertext obtained through encryption of the fifth encryption module 1028 to the user agent, so that the user agent decrypts the sixth ciphertext by using the first key, to obtain the web page, and the web page is used to trigger the user agent to send the first ciphertext.

Optionally, the third establishment module 1024 is specifically configured to:
if the node information includes a digital certificate and a private key, send the digital certificate to the user agent, receive encrypted information that is sent by the user agent according to a public key carried in the digital certificate, decrypt the encrypted information by using the private key to obtain a pre-master key, and establish the encrypted connection to the user agent by using the destination IP address; or
if the node information includes a digital certificate, send the digital certificate to the user agent, receive encrypted information that is sent by the user agent according to a public key carried in the digital certificate, send the encrypted information to the intermediate agent node, receive a pre-master key that is sent after the intermediate agent node decrypts the encrypted information by using a private key, and establish the encrypted connection to the user agent by using the destination IP address, where
the pre-master key is used to generate the first key and the second key.

To sum up, according to the service processing apparatus provided in this embodiment of the present invention, a first ciphertext sent by a user agent is received; the first ciphertext is decrypted by using a second key, to obtain the service information; and the service information is sent to a service processing system, so that the service processing system processes the service information according to a value-added service, and triggers a process of sending the processed service information to a network server. When the user agent uses the SSL/TLS protocol, an agent node may decrypt the transmitted first ciphertext, and send the service information obtained through decryption to the service processing system, so as to resolve the problem that the service processing system cannot decrypt a ciphertext, and consequently the service processing system cannot provide a value-added service to the user agent using the SSL/TLS protocol, and expand a use range of the value-added service.

Additionally, a redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information. Network server indication information or the object indication information may be directly sent to the user agent, and it does not need to first obtain a web page of the intermediate agent node, and then trigger the web page of the intermediate agent node to obtain the network server indication information or the object indication information, and therefore an operation process may be simplified, thereby improving service processing efficiency.

Referring to FIG. 11, FIG. 11 is a schematic structural diagram of a service processing apparatus according to an embodiment of the present invention. The service processing apparatus may include: a bus 1101, and a processor 1102, a memory 1103, a transmitter 1104 and a receiver 1105 that are connected to the bus. The memory 1103 is configured to store several instructions, and the instructions are configured to be executed by the processor 1102;
the receiver 1105 is configured to receive a first ciphertext sent by a user agent, where the first ciphertext is obtained by encrypting service information by the user agent by using a first key;
the processor 1102 is configured to decrypt, by using a second key, the first ciphertext received by the receiver 1105, to obtain the service information; and
the transmitter 1104 is configured to send the service information obtained through decryption of the processor 1102 to a service processing system, so that the service processing system processes the service information according to a value-added service, and triggers a process of sending the processed service information to a network server, where
the first key and the second key are keys agreed on between the user agent and the agent node when the user agent and the agent node establish an encrypted connection.

To sum up, according to the service processing apparatus provided in this embodiment of the present invention, a first ciphertext sent by a user agent is received; the first ciphertext is decrypted by using a second key, to obtain the service information; and the service information is sent to a service processing system, so that the service processing system processes the service information according to a value-added service, and triggers a process of sending the processed service information to a network server. When the user agent uses the SSL/TLS protocol, an agent node may decrypt the transmitted first ciphertext, and send the service information obtained through decryption to the service processing system, so as to resolve the problem that the service processing system cannot decrypt a ciphertext, and consequently the service processing system cannot provide a value-added service to the user agent using the SSL/TLS protocol, and expand a use range of the value-added service.

An embodiment of the present invention further provides a service processing apparatus. The service processing apparatus may include: a bus 1101, and a processor 1102, a memory 1103, a transmitter 1104 and a receiver 1105 that are connected to the bus. The memory 1103 is configured to store several instructions, and the instructions are configured to be executed by the processor 1102;
the receiver 1105 is configured to receive a first ciphertext sent by a user agent, where the first ciphertext is obtained by encrypting service information by the user agent by using a first key;
the processor 1102 is configured to decrypt, by using a second key, the first ciphertext received by the receiver 1105, to obtain the service information; and
the transmitter 1104 is configured to send the service information obtained through decryption of the processor 1102 to a service processing system, so that the service processing system processes the service information according to a value-added service, and triggers a process of sending the processed service information to a network server, where
the first key and the second key are keys agreed on between the user agent and the agent node when the user agent and the agent node establish an encrypted connection.

Optionally, the agent node is an intermediate agent node, and
the receiver 1105 is further configured to: after the transmitter 1104 sends the service information to the service processing system, receive the processed service information sent by the service processing system;
the processor 1102 is further configured to establish an encrypted connection to the network server, and agree on a third key and a fourth key with the network server; and encrypt the service information by using the third key, to obtain a second ciphertext; and
the transmitter 1104 is further configured to send the second ciphertext obtained through encryption of the processor 1102 to the network server, so that the network server decrypts the second ciphertext by using the fourth key, to obtain the service information.

Optionally, the receiver 1105 is further configured to: after the transmitter 1104 sends the second ciphertext to the network server, receive a third ciphertext sent by the network server, where the third ciphertext is obtained by encrypting service data by the network server by using the fourth key;
the processor 1102 is further configured to decrypt, by using the third key, the third ciphertext received by the receiver 1105, to obtain the service data;
the transmitter 1104 is further configured to send the service data obtained through decryption of the processor 1102 to the service processing system, so that the service processing system processes the service data according to a value-added service, and sends the processed service data to the intermediate agent node;
the processor 1102 is further configured to encrypt the processed service data by using the second key, to obtain a fourth ciphertext; and
the transmitter 1104 is further configured to send the fourth ciphertext obtained through encryption of the processor 1102 to the user agent, so that the user agent decrypts the fourth ciphertext by using the first key, to obtain the service data.

Optionally, the receiver 1105 is further configured to: before receiving the first ciphertext sent by the user agent, intercept a first access request sent by the user agent to the network server, the transmitter 1104 is further configured to instruct the user agent to send a first connection establishment request, and the processor 1102 is further configured to establish the encrypted connection to the user agent according to the first connection establishment request sent by the user agent, where the first access request is used to request to access the network server; or
the receiver 1105 is further configured to: before receiving the first ciphertext sent by the user agent, receive a first connection establishment request sent by the user agent, and the processor 1102 is further configured to establish the encrypted connection to the user agent according to the first connection establishment request sent by the user agent, where the first connection establishment request is sent by the user agent after the user agent receives a trigger signal triggered by a user, and the trigger signal is generated after the user triggers a web page of the intermediate agent node that is pre-stored in the user agent.

Optionally, the receiver 1105 is further configured to: before intercepting the first access request sent by the user agent to the network server, intercept a TCP connection request sent by the user agent to the network server; and
the processor 1102 is further configured to read information about the network server in the TCP connection request, replace the network server according to the information to establish a TCP connection to the user agent, and after establishment of the TCP connection is completed, establish an encrypted agent connection to the user agent by using a pre-stored digital certificate corresponding to the network server, where the encrypted agent connection is used by the user agent to send the first access request to the network server.

Optionally, the transmitter 1104 is further configured to send a first digital certificate to the user agent, where the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or
the transmitter 1104 is further configured to send a third digital certificate and a fourth digital certificate to the user agent, where the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds.

Optionally, the transmitter 1104 is specifically configured to instruct, by using a redirection response, the user agent to send the first access request.

Optionally, the redirection response includes a URL of the intermediate agent node; or
the redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information.

Optionally, the redirection response includes a URL of the intermediate agent node, and
the receiver 1105 is further configured to: after the processor 1102 establishes the encrypted connection to the user agent according to the first connection establishment request sent by the user agent, receive a fifth ciphertext sent by the user agent, where the fifth ciphertext is obtained by encrypting a second access request by the user agent by using the first key, and the second access request is used to request to access the intermediate agent node;
the processor 1102 is further configured to decrypt, by using the second key, the fifth ciphertext received by the receiver 1105, to obtain the second access request; obtain the web page of the intermediate agent node; and encrypt the web page by using the second key, to obtain a sixth ciphertext; and
the transmitter 1104 is further configured to send the sixth ciphertext obtained through encryption of the processor 1102 to the user agent, so that the user agent decrypts the sixth ciphertext by using the first key, to obtain the web page, and the web page is used to trigger the user agent to send the first ciphertext.

Optionally, the agent node is a front-end agent node located between the user agent and an intermediate agent node,
the receiver 1105 is further configured to: after the transmitter 1104 sends the service information to the service processing system, receive service data sent by the service processing system;
the processor 1102 is further configured to encrypt, by using the second key, the service data received by the receiver 1105, to obtain a seventh ciphertext; and
the transmitter 1104 is further configured to send the seventh ciphertext obtained through encryption of the processor 1102 to the user agent, so that the user agent decrypts the seventh ciphertext by using the first key, to obtain the service data.

Optionally, the receiver 1105 is further configured to: before receiving the first ciphertext sent by the user agent, intercept a second connection establishment request sent by the user agent to the intermediate agent node, where the second connection establishment request includes a destination IP address of the intermediate agent node; and
the processor 1102 is configured to establish the encrypted connection to the user agent according to the destination IP address and pre-stored node information of the intermediate agent node.

Optionally, after the intermediate agent node intercepts a first access request sent by the user agent to the network server, the intermediate agent node instructs the user agent to send the second connection establishment request, where the first access request is used to request to access the network server, or the second connection establishment request is sent by the user agent after the user agent receives a trigger signal triggered by a user, and the trigger signal is generated after the user triggers a web page of the intermediate agent node that is pre-stored in the user agent.

Optionally, after intercepting, by using the encrypted agent connection, the first access request sent by the user agent to the network server, the intermediate agent node instructs the user agent to send the second connection establishment request, and the encrypted agent connection is established to the user agent by using the pre-stored digital certificate corresponding to the network server after the intermediate agent node intercepts the TCP connection request sent by the user agent to the network server, reads information about the network server in the TCP connection request, and replaces the network server according to the information to establish the TCP connection to the user agent, and after establishment of the TCP connection is completed.

Optionally, when the intermediate agent node instructs, by using a redirection response, the user agent to send the second connection establishment request after the intermediate agent node intercepts the first access request, the redirection response includes a URL of the intermediate agent node; or
the redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information.

Optionally, when the redirection response includes a URL of the intermediate agent node,
the receiver 1105 is further configured to: after the processor 1102 establishes the encrypted connection to the user agent according to the destination IP address and the pre-stored node information of the intermediate agent node, receive a fifth ciphertext sent by the user agent, where the fifth ciphertext is obtained by encrypting a second access request by the user agent by using the first key, and the second access request is used to request to access the intermediate agent node;
the processor 1102 is further configured to decrypt, by using the second key, the fifth ciphertext received by the receiver 1105, to obtain the second access request;
the transmitter 1104 is further configured to send the second access request obtained through decryption of the processor 1102 to the service processing system, so that the service processing system processes the second access request according to a value-added service, and sends the processed second access request to the intermediate agent node;
the processor 1102 is further configured to encrypt, by using the second key, a web page sent by the service processing system, to obtain a sixth ciphertext, where the web page is sent by the intermediate agent node to the service processing system; and
the transmitter 1104 is further configured to send the sixth ciphertext obtained through encryption of the processor 1102 to the user agent, so that the user agent decrypts the sixth ciphertext by using the first key, to obtain the web page, and the web page is used to trigger the user agent to send the first ciphertext.

Optionally, if the node information includes a digital certificate and a private key, the transmitter 1104 is specifically configured to send the digital certificate to the user agent, the receiver 1105 is specifically configured to receive encrypted information that is sent by the user agent according to a public key carried in the digital certificate, and the processor 1102 is specifically configured to decrypt the encrypted information by using the private key to obtain a pre-master key, and establish the encrypted connection to the user agent by using the destination IP address; or
if the node information includes a digital certificate, the transmitter 1104 is specifically configured to send the digital certificate to the user agent, the receiver 1105 is specifically configured to receive encrypted information that is sent by the user agent according to a public key carried in the digital certificate, the transmitter 1104 is further configured to send the encrypted information to the intermediate agent node, the receiver 1105 is further configured to receive a pre-master key that is sent after the intermediate agent node decrypts the encrypted information by using a private key, and the processor 1102 is specifically configured to establish the encrypted connection to the user agent by using the destination IP address, where
the pre-master key is used to generate the first key and the second key.

To sum up, according to the service processing apparatus provided in this embodiment of the present invention, a first ciphertext sent by a user agent is received; the first ciphertext is decrypted by using a second key, to obtain the service information; and the service information is sent to a service processing system, so that the service processing system processes the service information according to a value-added service, and triggers a process of sending the processed service information to a network server. When the user agent uses the SSL/TLS protocol, an agent node may decrypt the transmitted first ciphertext, and send the service information obtained through decryption to the service processing system, so as to resolve the problem that the service processing system cannot decrypt a ciphertext, and consequently the service processing system cannot provide a value-added service to the user agent using the SSL/TLS protocol, and expand a use range of the value-added service.

Additionally, a redirection response includes an agent URL, the agent URL is obtained by adding an agent indication by an intermediate agent node to indication information of the network server, and the indication information is one of web page indication information, object indication information of an object in a web page, or information that is obtained by converting the web page indication information or the object indication information. Network server indication information or the object indication information may be directly sent to the user agent, and it does not need to first obtain a web page of the intermediate agent node, and then trigger the web page of the intermediate agent node to obtain the network server indication information or the object indication information, and therefore an operation process may be simplified, thereby improving service processing efficiency.

It should be noted that when the service processing apparatus provided in the embodiment performs service processing, description is made only through examples of division of the functional modules. In an actual application, the functions may be assigned according to needs to be implemented by different functional modules, that is, the internal structure of the service processing apparatus is divided into different functional modules, so as to implement all or a part of the functions described above. Furthermore, the service processing apparatus embodiment provided by the embodiments belongs to the same idea as the service processing method embodiment, and the method embodiment may serve as a reference for details of a specific implementation process thereof, which are not repeated herein.

The sequence numbers of the foregoing embodiments of the present invention are merely for illustrative purposes, and are not intended to indicate priorities of the embodiments.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division may merely be logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service processing method, wherein the method comprises:
receiving, by an agent node, a first ciphertext sent by a user agent, wherein the first ciphertext is obtained by encrypting service information by the user agent by using a first key;
decrypting, by the agent node, the first ciphertext by using a second key, to obtain the service information; and
sending, by the agent node, the service information to a service processing system, so that the service processing system processes the service information according to a value-added service, and triggers a process of sending the processed service information to a network server, wherein
the first key and the second key are keys agreed on between the user agent and the agent node when the user agent and the agent node establish an encrypted connection.

2. The method according to claim 1, wherein the agent node is an intermediate agent node, and after the sending, by the agent node, the service information to a service processing system, the method further comprises:
receiving, by the intermediate agent node, the processed service information sent by the service processing system;
establishing, by the intermediate agent node, an encrypted connection to the network server, and agreeing on a third key and a fourth key with the network server;
encrypting, by the intermediate agent node, the service information by using the third key, to obtain a second ciphertext; and
sending, by the intermediate agent node, the second ciphertext to the network server, so that the network server decrypts the second ciphertext by using the fourth key, to obtain the service information.

3. The method according to claim 2, wherein after the sending, by the intermediate agent node, the second ciphertext to the network server, the method further comprises:
receiving, by the intermediate agent node, a third ciphertext sent by the network server, wherein the third ciphertext is obtained by encrypting service data by the network server by using the fourth key;
decrypting, by the intermediate agent node, the third ciphertext by using the third key, to obtain the service data;
sending, by the intermediate agent node, the service data to the service processing system, so that the service processing system processes the service data according to a value-added service, and sends the processed service data to the intermediate agent node;
encrypting, by the intermediate agent node, the processed service data by using the second key, to obtain a fourth ciphertext; and
sending, by the intermediate agent node, the fourth ciphertext to the user agent, so that the user agent decrypts the fourth ciphertext by using the first key, to obtain the service data.

4. The method according to claim 2 or 3, wherein before the receiving, by an agent node, a first ciphertext sent by a user agent, the method further comprises:
intercepting, by the intermediate agent node, a first access request sent by the user agent to the network server, instructing the user agent to send a first connection establishment request, and establishing the encrypted connection to the user agent according to the first connection establishment request sent by the user agent, wherein the first access request is used to request to access the network server; or
receiving, by the intermediate agent node, a first connection establishment request sent by the user agent, and establishing the encrypted connection to the user agent according to the first connection establishment request sent by the user agent, wherein the first connection establishment request is sent by the user agent after the user agent receives a trigger signal triggered by a user, and the trigger signal is generated after the user triggers a web page of the intermediate agent node that is pre-stored in the user agent.

5. The method according to claim 4, wherein the instructing the user agent to send a first connection establishment request comprises:
instructing, by using a redirection response, the user agent to send the first connection establishment request.

6. The method according to claim 5, wherein
the redirection response comprises a URL of the intermediate agent node, or
the redirection response comprises an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

7. The method according to claim 6, wherein when the redirection response comprises the URL of the intermediate agent node, after the establishing, by the intermediate agent node, the encrypted connection to the user agent according to the first connection establishment request sent by the user agent, the method further comprises:
receiving, by the intermediate agent node, a fifth ciphertext sent by the user agent, wherein the fifth ciphertext is obtained by encrypting a second access request by the user agent by using the first key, and the second access request is used to request to access the intermediate agent node;
decrypting, by the intermediate agent node, the fifth ciphertext by using the second key, to obtain the second access request;
obtaining, by the intermediate agent node, the web page of the intermediate agent node;
encrypting, by the intermediate agent node, the web page by using the second key, to obtain a sixth ciphertext; and
sending, by the intermediate agent node, the sixth ciphertext to the user agent, so that the user agent decrypts the sixth ciphertext by using the first key, to obtain the web page, and the web page is used to trigger the user agent to send the first ciphertext.

8. The method according to claim 1, wherein the agent node is a front-end agent node located between the user agent and an intermediate agent node, and after the sending, by the agent node, the service information to a service processing system, the method further comprises:
receiving, by the front-end agent node, service data sent by the service processing system;
encrypting, by the front-end agent node, the service data by using the second key, to obtain a seventh ciphertext; and
sending, by the front-end agent node, the seventh ciphertext to the user agent, so that the user agent decrypts the seventh ciphertext by using the first key, to obtain the service data.

9. The method according to claim 8, wherein before the receiving, by an agent node, a first ciphertext sent by a user agent, the method further comprises:
intercepting, by the front-end agent node, a second connection establishment request sent by the user agent to the intermediate agent node, wherein the second connection establishment request comprises a destination Internet Protocol IP address of the intermediate agent node; and
establishing, by the front-end agent node, the encrypted connection to the user agent according to the destination IP address and pre-stored node information of the intermediate agent node.

10. The method according to claim 9, wherein
after the intermediate agent node intercepts a first access request sent by the user agent to the network server, the intermediate agent node instructs the user agent to send the second connection establishment request, wherein the first access request is used to request to access the network server, or
the second connection establishment request is sent by the user agent after the user agent receives a trigger signal triggered by a user, and the trigger signal is generated after the user triggers a web page of the intermediate agent node that is pre-stored in the user agent.

11. The method according to claim 10, wherein when the intermediate agent node instructs, by using a redirection response, the user agent to send the second connection establishment request after the intermediate agent node intercepts the first access request,
the redirection response comprises a URL of the intermediate agent node; or
the redirection response comprises an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

12. The method according to claim 11, wherein when the redirection response comprises the URL of the intermediate agent node,
after the establishing, by the front-end agent node, the encrypted connection to the user agent according to the destination IP address and pre-stored node information of the intermediate agent node, the method further comprises:
receiving, by the front-end agent node, a fifth ciphertext sent by the user agent, wherein the fifth ciphertext is obtained by encrypting a second access request by the user agent by using the first key, and the second access request is used to request to access the intermediate agent node;
decrypting, by the front-end agent node, the fifth ciphertext by using the second key, to obtain the second access request;
sending, by the front-end agent node, the second access request to the service processing system, so that the service processing system processes the second access request according to a value-added service, and sends the processed second access request to the intermediate agent node;
encrypting, by the front-end agent node by using the second key, a web page sent by the service processing system, to obtain a sixth ciphertext, wherein the web page is sent by the intermediate agent node to the service processing system; and
sending, by the front-end agent node, the sixth ciphertext to the user agent, so that the user agent decrypts the sixth ciphertext by using the first key, to obtain the web page, and the web page is used to trigger the user agent to send the first ciphertext.

13. The method according to any one of claims 9 to 12, wherein the establishing, by the front-end agent node, the encrypted connection to the user agent according to the destination IP address and pre-stored node information of the intermediate agent node comprises:
if the node information comprises a digital certificate and a private key, sending, by the front-end agent node, the digital certificate to the user agent, receiving encrypted information that is sent by the user agent according to a public key carried in the digital certificate, decrypting the encrypted information by using the private key to obtain a pre-master key, and establishing the encrypted connection to the user agent by using the destination IP address; or
if the node information comprises a digital certificate, sending, by the front-end agent node, the digital certificate to the user agent, receiving encrypted information that is sent by the user agent according to a public key carried in the digital certificate, sending the encrypted information to the intermediate agent node, receiving a pre-master key that is sent after the intermediate agent node decrypts the encrypted information by using a private key, and establishing the encrypted connection to the user agent by using the destination IP address, wherein
the pre-master key is used to generate the first key and the second key.

14. The method according to claim 4, wherein before the intercepting, by the intermediate agent node, a first access request sent by the user agent to the network server, the method further comprises:
intercepting, by the intermediate agent node, a transmission control protocol TCP connection request sent by the user agent to the network server; and
reading, by the intermediate agent node, information in the TCP connection request, replacing the network server according to the information to establish a TCP connection to the user agent, and after establishment of the TCP connection is completed, establishing an encrypted agent connection to the user agent by using a pre-stored digital certificate corresponding to the network server, wherein the encrypted agent connection is used by the user agent to send the first access request to the network server.

15. The method according to claim 14, wherein the establishing an encrypted agent connection to the user agent by using a pre-stored digital certificate corresponding to the network server comprises:
sending, by the intermediate agent node, a first digital certificate to the user agent, wherein the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or
sending, by the intermediate agent node, a third digital certificate and a fourth digital certificate to the user agent, wherein the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds.

16. The method according to claim 10, wherein after the intermediate agent node intercepts, by using an encrypted agent connection, the first access request sent by the user agent to the network server, the intermediate agent node instructs the user agent to send the second connection establishment request, and the encrypted agent connection is established with the user agent by using a pre-stored digital certificate corresponding to the network server after the intermediate agent node intercepts a TCP connection request sent by the user agent to the network server, reads information in the TCP connection request, and replaces, according to the information, the network server to establish a TCP connection to the user agent, and after establishment of the TCP connection is completed.

17. A service processing apparatus, applied to an agent node, wherein the apparatus comprises:
a first receiving module, configured to receive a first ciphertext sent by a user agent, wherein the first ciphertext is obtained by encrypting service information by the user agent by using a first key;
a first decryption module, configured to decrypt, by using a second key, the first ciphertext received by the first receiving module, to obtain the service information; and
a first sending module, configured to send the service information obtained through decryption of the first decryption module to a service processing system, so that the service processing system processes the service information according to a value-added service, and triggers a process of sending the processed service information to a network server, wherein
the first key and the second key are keys agreed on between the user agent and the agent node when the user agent and the agent node establish an encrypted connection.

18. The apparatus according to claim 17, wherein the agent node is an intermediate agent node, and the apparatus further comprises:
a second receiving module, configured to: after the first sending module sends the service information to the service processing system, receive the processed service information sent by the service processing system;
a key agreeing-on module, configured to establish an encrypted connection to the network server, and agree on a third key and a fourth key with the network server;
a first encryption module, configured to encrypt the service information by using the third key that is agreed on by the key agreeing-on module, to obtain a second ciphertext; and
a second sending module, configured to send the second ciphertext obtained through encryption of the first encryption module to the network server, so that the network server decrypts the second ciphertext by using the fourth key, to obtain the service information.

19. The apparatus according to claim 18, wherein the apparatus further comprises:
a third receiving module, configured to: after the second sending module sends the second ciphertext to the network server, receive a third ciphertext sent by the network server, wherein the third ciphertext is obtained by encrypting service data by the network server by using the fourth key;
a second decryption module, configured to decrypt, by using the third key, the third ciphertext received by the third receiving module, to obtain the service data;
a third sending module, configured to send the service data obtained through decryption of the second decryption module to the service processing system, so that the service processing system processes the service data according to a value-added service, and sends the processed service data to the intermediate agent node;
a second encryption module, configured to encrypt the processed service data by using the second key, to obtain a fourth ciphertext; and
a fourth sending module, configured to send the fourth ciphertext obtained through encryption of the second encryption module to the user agent, so that the user agent decrypts the fourth ciphertext by using the first key, to obtain the service data.

20. The apparatus according to claim 18 or 19, wherein the apparatus further comprises:
a first establishment module, configured to: before the first receiving module receives the first ciphertext sent by the user agent, intercept a first access request sent by the user agent to the network server, instruct the user agent to send a first connection establishment request, and establish the encrypted connection to the user agent according to the first connection establishment request sent by the user agent, wherein the first access request is used to request to access the network server; or
a second establishment module, configured to: before the first receiving module receives the first ciphertext sent by the user agent, receive a first connection establishment request sent by the user agent, and establish the encrypted connection to the user agent according to the first connection establishment request sent by the user agent, wherein the first connection establishment request is sent by the user agent after the user agent receives a trigger signal triggered by a user, and the trigger signal is generated after the user triggers a web page of the intermediate agent node that is pre-stored in the user agent.

21. The apparatus according to claim 20, wherein the first establishment module is specifically configured to instruct, by using a redirection response, the user agent to send the first connection establishment request.

22. The apparatus according to claim 21, wherein
the redirection response comprises a URL of the intermediate agent node, or
the redirection response comprises an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

23. The apparatus according to claim 22, wherein when the redirection response comprises the URL of the intermediate agent node, the apparatus further comprises:
a fourth receiving module, configured to: after the first establishment module establishes the encrypted connection to the user agent according to the first connection establishment request sent by the user agent, receive a fifth ciphertext sent by the user agent, wherein the fifth ciphertext is obtained by encrypting a second access request by the user agent by using the first key, and the second access request is used to request to access the intermediate agent node;
a third decryption module, configured to decrypt, by using the second key, the fifth ciphertext received by the fifth receiving module, to obtain the second access request;
a web page obtaining module, configured to obtain the web page of the intermediate agent node;
a third encryption module, configured to encrypt, by using the second key, the web page obtained by the web page obtaining module, to obtain a sixth ciphertext; and
a fifth sending module, configured to send the sixth ciphertext obtained through encryption of the third encryption module to the user agent, so that the user agent decrypts the sixth ciphertext by using the first key, to obtain the web page, and the web page is used to trigger the user agent to send the first ciphertext.

24. The apparatus according to claim 17, wherein the agent node is a front-end agent node located between the user agent and an intermediate agent node, and the apparatus further comprises:
a fifth receiving module, configured to: after the first sending module sends the service information to the service processing system, receive service data sent by the service processing system;
a fourth encryption module, configured to encrypt, by using the second key, the service data received by the fifth receiving module, to obtain a seventh ciphertext; and
a sixth sending module, configured to send the seventh ciphertext obtained through encryption of the fourth encryption module to the user agent, so that the user agent decrypts the seventh ciphertext by using the first key, to obtain the service data.

25. The apparatus according to claim 24, wherein the apparatus further comprises:
a request interception module, configured to: before the first receiving module receives the first ciphertext sent by the user agent, intercept a second connection establishment request sent by the user agent to the intermediate agent node, wherein the second connection establishment request comprises a destination Internet Protocol IP address of the intermediate agent node; and
a third establishment module, configured to establish the encrypted connection to the user agent according to the destination IP address and pre-stored node information of the intermediate agent node.

26. The apparatus according to claim 25, wherein
after the intermediate agent node intercepts a first access request sent by the user agent to the network server, the intermediate agent node instructs the user agent to send the second connection establishment request, wherein the first access request is used to request to access the network server, or
the second connection establishment request is sent by the user agent after the user agent receives a trigger signal triggered by a user, and the trigger signal is generated after the user triggers a web page of the intermediate agent node that is pre-stored in the user agent.

27. The apparatus according to claim 26, wherein when the intermediate agent node instructs, by using a redirection response, the user agent to send the second connection establishment request after the intermediate agent node intercepts the first access request,
the redirection response comprises a URL of the intermediate agent node; or
the redirection response comprises an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

28. The apparatus according to claim 27, wherein when the redirection response comprises the URL of the intermediate agent node, the apparatus further comprises:
a sixth receiving module, configured to: after the third establishment module establishes the encrypted connection to the user agent according to the destination IP address and the pre-stored node information of the intermediate agent node, receive a fifth ciphertext sent by the user agent, wherein the fifth ciphertext is obtained by encrypting a second access request by the user agent by using the first key, and the second access request is used to request to access the intermediate agent node;
a fourth decryption module, configured to decrypt, by using the second key, the fifth ciphertext received by the sixth receiving module, to obtain the second access request;
a seventh sending module, configured to send the second access request obtained through decryption of the fourth decryption module to the service processing system, so that the service processing system processes the second access request according to a value-added service, and sends the processed second access request to the intermediate agent node;
a fifth encryption module, configured to encrypt, by using the second key, a web page sent by the service processing system, to obtain a sixth ciphertext, wherein the web page is sent by the intermediate agent node to the service processing system; and
an eighth sending module, configured to send the sixth ciphertext obtained through encryption of the fifth encryption module to the user agent, so that the user agent decrypts the sixth ciphertext by using the first key, to obtain the web page, and the web page is used to trigger the user agent to send the first ciphertext.

29. The apparatus according to any one of claims 25 to 28, wherein the third establishment module is specifically configured to:
if the node information comprises a digital certificate and a private key, send the digital certificate to the user agent, receive encrypted information that is sent by the user agent according to a public key carried in the digital certificate, decrypt the encrypted information by using the private key to obtain a pre-master key, and establish the encrypted connection to the user agent by using the destination IP address; or
if the node information comprises a digital certificate, send the digital certificate to the user agent, receive encrypted information that is sent by the user agent according to a public key carried in the digital certificate, send the encrypted information to the intermediate agent node, receive a pre-master key that is sent after the intermediate agent node decrypts the encrypted information by using a private key, and establish the encrypted connection to the user agent by using the destination IP address, wherein
the pre-master key is used to generate the first key and the second key.

30. The apparatus according to claim 20, wherein the apparatus further comprises:
a request obtaining module, configured to: before the first establishment module intercepts the first access request sent by the user agent to the network server, intercept a transmission control protocol TCP connection request sent by the user agent to the network server; and
a fourth establishment module, configured to read information in the TCP connection request, replace the network server according to the information to establish a TCP connection to the user agent, and after establishment of the TCP connection is completed, establish an encrypted agent connection to the user agent by using a pre-stored digital certificate corresponding to the network server, wherein the encrypted agent connection is used by the user agent to send the first access request to the network server.

31. The apparatus according to claim 30, wherein the fourth establishment module is specifically configured to:
send a first digital certificate to the user agent, wherein the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or
send a third digital certificate and a fourth digital certificate to the user agent, wherein the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds.

32. The apparatus according to claim 26, wherein after the intermediate agent node intercepts, by using an encrypted agent connection, the first access request sent by the user agent to the network server, the intermediate agent node instructs the user agent to send the second connection establishment request, and the encrypted agent connection is established with the user agent by using a pre-stored digital certificate corresponding to the network server after the intermediate agent node intercepts a TCP connection request sent by the user agent to the network server, reads information in the TCP connection request, and replaces, according to the information, the network server to establish a TCP connection to the user agent, and after establishment of the TCP connection is completed.

33. A service processing apparatus, applied to an agent node, wherein the apparatus comprises: a bus, and a processor, a memory, a transmitter and a receiver that are connected to the bus, wherein the memory is configured to store several instructions, and the instructions are configured to be executed by the processor;
the receiver is configured to receive a first ciphertext sent by a user agent, wherein the first ciphertext is obtained by encrypting service information by the user agent by using a first key;
the processor is configured to decrypt, by using a second key, the first ciphertext received by the receiver, to obtain the service information; and
the transmitter is configured to send the service information obtained through decryption of the processor to a service processing system, so that the service processing system processes the service information according to a value-added service, and triggers a process of sending the processed service information to a network server, wherein
the first key and the second key are keys agreed on between the user agent and the agent node when the user agent and the agent node establish an encrypted connection.

34. The apparatus according to claim 33, wherein the agent node is an intermediate agent node, and
the receiver is further configured to: after the transmitter sends the service information to the service processing system, receive the processed service information sent by the service processing system;
the processor is further configured to establish an encrypted connection to the network server, and agree on a third key and a fourth key with the network server; and encrypt the service information by using the third key, to obtain a second ciphertext; and
the transmitter is further configured to send the second ciphertext obtained through encryption of the processor to the network server, so that the network server decrypts the second ciphertext by using the fourth key, to obtain the service information.

35. The apparatus according to claim 34, wherein
the receiver is further configured to: after the transmitter sends the second ciphertext to the network server, receive a third ciphertext sent by the network server, wherein the third ciphertext is obtained by encrypting service data by the network server by using the fourth key;
the processor is further configured to decrypt, by using the third key, the third ciphertext received by the receiver, to obtain the service data;
the transmitter is further configured to send the service data obtained through decryption of the processor to the service processing system, so that the service processing system processes the service data according to a value-added service, and sends the processed service data to the intermediate agent node;
the processor is further configured to encrypt the processed service data by using the second key, to obtain a fourth ciphertext; and
the transmitter is further configured to send the fourth ciphertext obtained through encryption of the processor to the user agent, so that the user agent decrypts the fourth ciphertext by using the first key, to obtain the service data.

36. The apparatus according to claim 34 or 35, wherein
the receiver is further configured to: before receiving the first ciphertext sent by the user agent, intercept a first access request sent by the user agent to the network server, the transmitter is further configured to instruct the user agent to send a first connection establishment request, and the processor is further configured to establish the encrypted connection to the user agent according to the first connection establishment request sent by the user agent, wherein the first access request is used to request to access the network server; or
the receiver is further configured to: before receiving the first ciphertext sent by the user agent, receive a first connection establishment request sent by the user agent, and the processor is further configured to establish the encrypted connection to the user agent according to the first connection establishment request sent by the user agent, wherein the first connection establishment request is sent by the user agent after the user agent receives a trigger signal triggered by a user, and the trigger signal is generated after the user triggers a web page of the intermediate agent node that is pre-stored in the user agent.

37. The apparatus according to claim 36, wherein the transmitter is specifically configured to instruct, by using a redirection response, the user agent to send the first connection establishment request.

38. The apparatus according to claim 37, wherein
the redirection response comprises a URL of the intermediate agent node, or
the redirection response comprises an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

39. The apparatus according to claim 38, wherein when the redirection response comprises the URL of the intermediate agent node,
the receiver is further configured to: after the processor establishes the encrypted connection to the user agent according to the first connection establishment request sent by the user agent, receive a fifth ciphertext sent by the user agent, wherein the fifth ciphertext is obtained by encrypting a second access request by the user agent by using the first key, and the second access request is used to request to access the intermediate agent node;
the processor is further configured to decrypt, by using the second key, the fifth ciphertext received by the receiver, to obtain the second access request; obtain the web page of the intermediate agent node; and encrypt the web page by using the second key, to obtain a sixth ciphertext; and
the transmitter is further configured to send the sixth ciphertext obtained through encryption of the processor to the user agent, so that the user agent decrypts the sixth ciphertext by using the first key, to obtain the web page, and the web page is used to trigger the user agent to send the first ciphertext.

40. The apparatus according to claim 33, wherein the agent node is a front-end agent node located between the user agent and an intermediate agent node,
the receiver is further configured to: after the transmitter sends the service information to the service processing system, receive service data sent by the service processing system;
the processor is further configured to encrypt, by using the second key, the service data received by the receiver, to obtain a seventh ciphertext; and
the transmitter is further configured to send the seventh ciphertext obtained through encryption of the processor to the user agent, so that the user agent decrypts the seventh ciphertext by using the first key, to obtain the service data.

41. The apparatus according to claim 40, wherein
the receiver is further configured to: before receiving the first ciphertext sent by the user agent, intercept a second connection establishment request sent by the user agent to the intermediate agent node, wherein the second connection establishment request comprises a destination Internet Protocol IP address of the intermediate agent node; and
the processor is configured to establish the encrypted connection to the user agent according to the destination IP address and pre-stored node information of the intermediate agent node.

42. The apparatus according to claim 41, wherein
after the intermediate agent node intercepts a first access request sent by the user agent to the network server, the intermediate agent node instructs the user agent to send the second connection establishment request, wherein the first access request is used to request to access the network server, or
the second connection establishment request is sent by the user agent after the user agent receives a trigger signal triggered by a user, and the trigger signal is generated after the user triggers a web page of the intermediate agent node that is pre-stored in the user agent.

43. The apparatus according to claim 42, wherein when the intermediate agent node instructs, by using a redirection response, the user agent to send the second connection establishment request after the intermediate agent node intercepts the first access request,
the redirection response comprises a URL of the intermediate agent node; or
the redirection response comprises an agent URL, the agent URL is obtained by adding an agent indication by the intermediate agent node to indication information of the network server, and the indication information is one of web page indication information, object indication information of an object in a web page, or information that is obtained by converting the web page indication information or the object indication information.

44. The apparatus according to claim 43, wherein when the redirection response comprises the URL of the intermediate agent node,
the receiver is further configured to: after the processor establishes the encrypted connection to the user agent according to the destination IP address and the pre-stored node information of the intermediate agent node, receive a fifth ciphertext sent by the user agent, wherein the fifth ciphertext is obtained by encrypting a second access request by the user agent by using the first key, and the second access request is used to request to access the intermediate agent node;
the processor is further configured to decrypt, by using the second key, the fifth ciphertext received by the receiver, to obtain the second access request;
the transmitter is further configured to send the second access request obtained through decryption of the processor to the service processing system, so that the service processing system processes the second access request according to a value-added service, and sends the processed second access request to the intermediate agent node;
the processor is further configured to encrypt, by using the second key, a web page sent by the service processing system, to obtain a sixth ciphertext, wherein the web page is sent by the intermediate agent node to the service processing system; and
the transmitter is further configured to send the sixth ciphertext obtained through encryption of the processor to the user agent, so that the user agent decrypts the sixth ciphertext by using the first key, to obtain the web page, and the web page is used to trigger the user agent to send the first ciphertext.

45. The apparatus according to any one of claims 41 to 44, wherein
if the node information comprises a digital certificate and a private key, the transmitter is specifically configured to send the digital certificate to the user agent, the receiver is specifically configured to receive encrypted information that is sent by the user agent according to a public key carried in the digital certificate, and the processor is specifically configured to decrypt the encrypted information by using the private key to obtain a pre-master key, and establish the encrypted connection to the user agent by using the destination IP address; or
if the node information comprises a digital certificate, the transmitter is specifically configured to send the digital certificate to the user agent, the receiver is specifically configured to receive encrypted information that is sent by the user agent according to a public key carried in the digital certificate, the transmitter is further configured to send the encrypted information to the intermediate agent node, the receiver is further configured to receive a pre-master key that is sent after the intermediate agent node decrypts the encrypted information by using a private key, and the processor is specifically configured to establish the encrypted connection to the user agent by using the destination IP address, wherein
the pre-master key is used to generate the first key and the second key

46. The apparatus according to claim 36, wherein
the receiver is further configured to: before intercepting the first access request sent by the user agent to the network server, intercept a transmission control protocol TCP connection request sent by the user agent to the network server; and
the processor is further configured to read information in the TCP connection request, replace the network server according to the information to establish a TCP connection to the user agent, and after establishment of the TCP connection is completed, establish an encrypted agent connection to the user agent by using a pre-stored digital certificate corresponding to the network server, wherein the encrypted agent connection is used by the user agent to send the first access request to the network server.

47. The apparatus according to claim 46, wherein
the transmitter is further configured to send a first digital certificate to the user agent, wherein the first digital certificate is issued by a certificate issuer and is a digital certificate corresponding to the network server, and a second digital certificate of the certificate issuer is preconfigured in the user agent or in an operating system of a terminal in which the user agent is installed, so that the user agent verifies the first digital certificate according to the second digital certificate, and establishes the encrypted agent connection to the intermediate agent node after verification succeeds; or
the transmitter is further configured to send a third digital certificate and a fourth digital certificate to the user agent, wherein the third digital certificate is issued by an unauthorized certificate issuer and is a digital certificate corresponding to the network server, and the fourth digital certificate is a digital certificate of the unauthorized certificate issuer, so that the user agent verifies the third digital certificate according to the fourth digital certificate, and establishes the encrypted agent connection to the intermediate agent node after verification succeeds.

48. The apparatus according to claim 42, wherein after the intermediate agent node intercepts, by using an encrypted agent connection, the first access request sent by the user agent to the network server, the intermediate agent node instructs the user agent to send the second connection establishment request, and the encrypted agent connection is established with the user agent by using a pre-stored digital certificate corresponding to the network server after the intermediate agent node intercepts a TCP connection request sent by the user agent to the network server, reads information in the TCP connection request, and replaces, according to the information, the network server to establish a TCP connection to the user agent, and after establishment of the TCP connection is completed.
